# EUROPEAN PATENT APPLICATION

(11) **EP 1 069 512 A2**
(43) Date of publication of application: **17.01.2001**
(21) Application number: 00305829.4
(22) Date of filing: 11.07.2000
(51) Int. Cl.: G06F 13/40, G06F 13/16

(54) **Data processing apparatus with buffering between buses**

(30) Priority: 12.07.1999 JP 19800099
(71) Applicant: MATSUSHITA ELECTRIC INDUSTRIAL CO., LTD., Kadoma-shi, Osaka-fu, 571 (JP)
(72) Inventor: Yoshioka, Kosuke, Neyagawa-shi, Osaka-fu 572-0086 (JP); Kiyohara, Tokuzo, Osaka-shi, Osaka-fu 545-0053 (JP); Mochida, Tetsuji, Katano-shi, Osaka-fu 576-0054 (JP); Kimura, Kozo, Osaka-shi, Osaka-fu 533-0021 (JP); Ochiai, Toshiyuki, Ibaraki-shi, Osaka-fu 567-0895 (JP)
(74) Representative: Butcher, Ian James

(57) **Abstract**

The local buffers 13-15 connected to the buses 10-12 input and output data in a manner that cancels out the difference between the data transfer speeds of the bus 1 and the buses 10-12, where the data transfer speed of a bus changes in proportion to the bit width of the bus. The data transfer rates assigned to the master devices 4-6 are changed by changing the read/write ports of the master devices 4-6, buses 10-12, and local buffers 13-15. The memory device, memory controller 3, and bus 1 need not be re-designed.

## Description

### BACKGROUND OF THE INVENTION

### (1) Field of the Invention

The present invention relates to a data processing apparatus for effectively processing a plurality of data transfer requests.

### (2) Description of Background Art

Recently, various types of multimedia-related products such as DVD players or apparatuses for receiving digital satellite broadcasts have appeared on consumer-product markets. Competition among makers in developing such multimedia-related products is intensifying. With the above situation as a backdrop, designers in the application areas of signal processing are expending much effort in developing general-purpose signal processors that effectively perform a plurality of types of media processing simultaneously. This is because the market value of such multimedia-related products depends on how effectively the products process data such as computer graphics simultaneously, as well as MPEG streams in which video and audio data are multiplexed. Here, the media processing is classified into various types such as video decoding, audio decoding, video outputting, and computer graphics drawing.

The media processing, compared to the other data processing, has a large number of opportunities to simultaneously execute a plurality of independent DMA transfers. Also, in the media processing, the DMA transfers have different transfer rates depending on the processing type. As a result, various cares should be taken in improving the processing efficiency of processors. Here, DMA (Direct Memory Access) refers to a data transfer performed between a plurality of master devices and a memory without involvement by a CPU.

In an example of the media processing, each master device includes an application program and a hardware device on which the application program runs, the application program achieving one of video decoding, audio decoding, video outputting, and computer graphics drawing, etc. In this example, the memory stores video data, audio data, and computer graphics data used by the application programs.

In the same example, the transfer rate of DMA transfer is a unit of data transfer being a product of the bit width of a read/write port of each master device (or the memory) and the operating frequency of each master device (or the memory). This will be explained more specifically using sample values. The application program for video decoding needs to perform a DMA transfer to transfer reference pictures for motion compensation. This DMA transfer requires 800MB/s of data transfer rate. The application programs for processing audio data or computer graphics data require 50MB/s of data transfer rate. The application program for video outputting requires 128MB/s×(the number of planes) as the data transfer rate. As apparent from the above, each type of media processing has a different data transfer rate since each type of media processing has a different data size to be processed and a different load to be applied to the decoding.

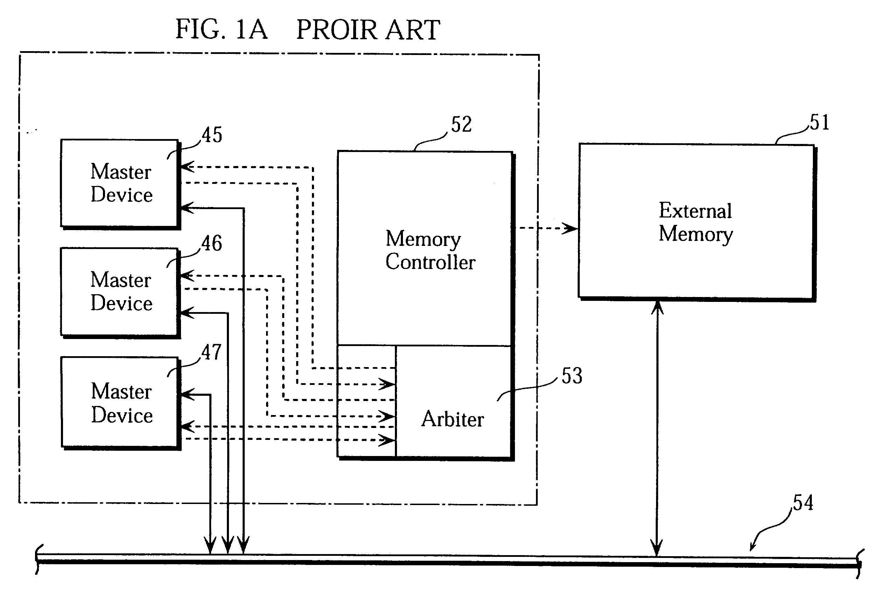

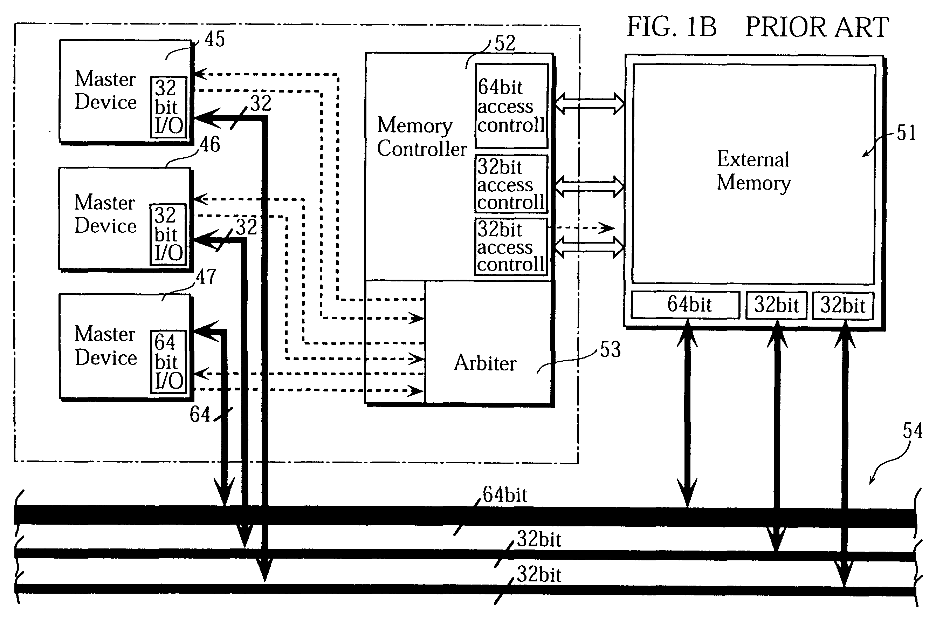

Now, an ordinary DMA transfer system will be compared to a DMA transfer system which has been improved for the media processing. FIG. 1A shows the ordinary DMA transfer system. FIG. 1B shows the improved DMA transfer system.

In FIG. 1A, a data processing apparatus includes a memory 51, a memory controller 52, an arbiter 53, a bus 54, and master devices 45, 46, and 47.

The master devices 45, 46, and 47 each run an application program that performs the media processing. The application programs issue a bus request to the memory controller 52 when they request a DMA transfer. When a bus request is issued, the arbiter 53 arbitrates between the master devices 45, 46, and 47 to give one of them a bus use right. The master devices which fail to receive the bus use right cannot transfer data until they receive the bus use right.

As described earlier, the media processing requires an optimum data transfer rate to be assigned to each application program. In one technique, the bit width of the bus is divided into a plurality of bit widths to be assigned to the master devices 45 to 47.

According to the above technique, when, for example, the bit width of the read/write port of the memory 51 and the bit width of the bus is 128 bits, the bit width is divided into 64 bits, 32 bits, and 32 bits. These bit widths are assigned to the master devices 45 to 47. FIG. 1B shows an example of such a bit width assigning technique. As shown in FIG. 1B, the bit width of 128 bits is divided into 64 bits, 32 bits, and 32 bits, and these bit widths are assigned to the master devices 45 to 47, respectively.

In this example, the read/write port of the memory 51 is also divided in correspondence to the division of the bus bit width, and the memory controller controls accesses to the memory in parallel. More specifically, the memory controller reads 64-bit, 32-bit, and 32-bit data from the memory in parallel, and writes 64-bit, 32-bit, and 32-bit data to the memory in parallel. To control such parallel accesses to the memory, the memory controller needs to have control circuits (the 64-bit, 32-bit, and 32-bit access controls shown in FIG. 1B). In this method, no contention between the master buses 45 to 47 occurs in using the bus, and no bus lock occurs to the memory bus.

It is presumed here that the master device 45 performs video decoding. The master device 45 is therefore assigned as large a bit width as 64 bits since the video decoding requires a higher data transfer rate than the other types of media processing.

To maintain the real time operation as a whole, each type of the media processing requires a different data transfer rate. As a result, in this method in which the bus is divided, a ratio of the division should be determined in accordance with the transfer rates required by the application programs.

Lastly, a memory device used in the above data processing apparatus will be described. The above application areas of signal processing require the memory device that has a large capacity and a high data transfer rate. To meet the requirement, various technical developments have been achieved in the fields of the semiconductor processing and the mounting technology. As a result, high-performance memory devices are appearing one after another on the electronic parts markets, and such memory devices often experience frequent model changes. It should be noted here that such memory devices include SDRAM and memories conforming to RAMBUS specifications. SDRAM (Synchronous Dynamic Random Access Memory) is a memory performing the burst transmission of data and having higher data transfer ability than DRAM. The RAMBUS specifications include strictly defined specifications of interfaces between memories and buses, and enable the memories conforming to the RAMBUS specifications to have higher data transfer rates than SDRAM. One of such memories is called D-RDRAM. It is also possible to conduct the semiconductor processing so that a data processing apparatus and a DRAM of a relatively large capacity are mounted on one chip (what is called on-chip).

With the appearance of a great number of memory devices and frequent model changes as described earlier, the designers are perplexed as to how to design the memory architecture. Key determinants are the data transfer rate and production cost. Considering possibilities of the data processing apparatus is nevertheless important in designing the memory architecture. Here, considering possibilities of the data processing apparatus means to make the memory architecture general-purpose so that memory devices with various hardware specifications can be adopted.

Meanwhile, the above bit width assigning technique for assigning an optimum bit width to each master device by dividing the bit width of a bus have a problem. That is to say, increasing or decreasing the bit width of each of the master devices 45 to 47 will ripple through the apparatus in its entirety, resulting in a change of the overall apparatus design.

Such a change of the bit widths of the master devices is required when, for example, a data processing apparatus used in a first apparatus is changed over to a second apparatus. Such changeovers often occur to a simultaneous development of a plurality of products having an MPEG stream decoding function in common. Now, a changeover of a data processing apparatus will be explained on the following presumption. It is presumed that the data processing apparatus shown in FIG. 1B is an MPEG stream decoding apparatus, that the MPEG stream decoding apparatus has been developed based on the premise that it is loaded into an optical disc reproduction apparatus, and that the MPEG stream decoding apparatus is now changed over to a digital satellite broadcast reception apparatus due to the maker's strategy in product development. Upon receipt of the instruction of such changeover, the designer of the MPEG stream decoding apparatus is required to change the bit widths having been assigned for the media processing of the reproduction apparatus to those for the reception apparatus. To perform this change, the designer needs to consider, in case of a conventional data processing apparatus, (1) re-wiring of the bus, (2) re-designing of the read/write ports of the memory device, (3) re-designing of the read/write ports of the master devices 45 to 47, (4) re-designing of the memory controller, etc.

In the example shown in FIG. 1B, the memory controller exercises control to read 64-bit, 32-bit, and 32-bit data from the memory in parallel, and to write 64-bit, 32-bit, and 32-bit data to the memory in parallel. Here, if the bit width assignment is changed to assign 64 bits, 24 bits, and 8 bits to the master devices 45 to 47, respectively, the memory controller is required to exercise control to read 64-bit, 24-bit, and 8-bit data from the memory in parallel, and to write 64-bit, 24-bit, and 8-bit data to the memory in parallel. That is to say, the control by the memory controller shown in FIG. 1B must be changed radically. The bit width assignment to the interfaces to the master devices 45 to 47 must also be change. Furthermore, re-wiring must be carried out between the bus and the interfaces to the master devices 45 to 47.

The above re-wiring and the re-designing of (1) to (4) put an enormous load on the designer since the designer must expend substantially the same effort to the assignment of data transfer rate to each type of the media processing as to re-designing of the data processing apparatus.

As also described earlier, it is desirable that the memory architecture is designed so that memory devices with various hardware specifications can be adopted. Another problem lies in such designing of the memory architecture. In general, memory devices have such operating frequencies as deliver their highest performances. Conventional memory devices are set to such operating frequencies as deliver their highest performances. Therefore, when a memory device is to be replaced by another, the operating frequency of the data processing apparatus must be re-set to the value suitable for the new memory device. For example, there are cases where a memory device having been selected considering the production cost of the data processing apparatus and the memory capacity needs to be replaced by another one due to a specification change. Such replacement of memory devices put an enormous load on the designer since the designer must change the operating frequency of the data processing apparatus each time a memory device is changed.

Conventional data processing apparatuses have another problem. When a memory is mounted on a semiconductor chip together with a data processing apparatus as on-chip and another memory device is connected to the chip as an external memory, either of the on-chip memory and the memory device may not deliver its highest performance due to the difference of the operating frequency. When the memory 51, memory controller 52, and master devices 45, 46, and 47 are on-chipped, they must be operated at the same operating frequency. In this case, there is a possibility that the memory and the memory device (external memory) have different operating frequencies for delivering their highest performances. When this happens, when the data processing apparatus is operated at an operating frequency for delivering the highest performance of one, the other fails to deliver its highest performance.

Conventional data processing apparatuses have a further problem. In the media processing related to video products, it is desirable that the operating frequency of the data processing apparatus is determined based on the operating frequency of the display apparatus. However, this may prevent the memory device from delivering its highest performance.

### SUMMARY OF THE INVENTION

It is therefore the first object of the present invention to provide a data processing apparatus having high versatility in that it can respond to a future request to change data transfer rates assigned to the media processing.

It is the second object of the present invention to provide a data processing apparatus having high versatility in that it can respond to a future request to replace memory devices or to on-chip a memory.

The first object is fulfilled by a data processing apparatus for performing data transfers between a plurality of master devices and a memory device, comprising: a memory bus connected which includes two points and is connected at one of the two points to the memory device; a plurality of local buses each of which includes at least two points and is connected at one of the at least two points to one of the plurality of master devices; a transfer controller for reading data from the memory device, writing data to the memory device, and controlling the data transfers on the memory bus so that data is transferred at a transfer rate suitable for the master device on a corresponding local bus, and at a transfer rate suitable for the memory device on the memory bus; and a plurality of local buffer means each of which is connected to one of the plurality of local buses at another of the at least two points, is connected to the memory bus at the other of the two points, and inputs and outputs data in a manner that cancels out a difference between a transfer rate of the memory bus and a transfer rate of each local bus.

With the above-described construction, when a designer wants to change the data transfer rates assigned to the master devices, the designer need not re-design the whole data processing apparatus, but has only to change the data transfer rate assigned to the memory bus. When the designer is required to change the data transfer rate at a part of the data processing apparatus in future, the designer need not expend enormous efforts to do it since he/she can change the data transfer rate assigned to each master device without changing the data transfer rate assigned to the memory device and the memory bus. More specifically, suppose the data processing apparatus of the present invention is an MPEG stream decoding apparatus and that the MPEG stream decoding apparatus should now be changed over to a digital satellite broadcast reception apparatus due to the maker's strategy in product development, the designer has only to re-design the side of the plurality of master devices and the plurality of local buses, but needs not add any improvements to the side of the memory device and the memory bus. No matter how the bit widths are assigned to the master devices, changes are performed only to the plurality of local buses and control on the memory device needs not be changed. That is to say, the data transfer rate assigned to each master device can easily be changed.

The above data processing apparatus may further comprise an arbiter for, when a contention occurs between two or more requests issued by two or more master devices among the plurality of master devices, acknowledging one of the two or more requests and rejecting the other requests, the two or more requests being either data read requests or data write requests, wherein master devices that issued the rejected requests suspend transferring data on the memory bus and corresponding local buses.

With the above-stated construction, when a contention occurs between a plurality of requests to read/write data from/to the memory device issued by the master devices which perform a plurality of types of media processing classified as sub-systems such as audio data, sub-picture data, OSD, etc., the data transfer on either of the memory bus or the local buses is suspended. It is therefore possible to arbitrate the requests without reducing the data transfer efficiency of the whole data processing apparatus.

The above second object is fulfilled by the above data processing apparatus, wherein the memory device receives a synchronization clock signal having an operating frequency which is different from an operating frequency of the data processing apparatus, and the data processing apparatus further comprises: a dual port memory device which has one read/write port connected to the memory device and has a plurality of ports connected to the plurality of local buffer means respectively, and inputs and outputs data in a manner that cancels out a difference between the operating frequencies of the memory device and the data processing apparatus.

With the above construction, it is possible to control the data transfers between the memory device and the internal memory asynchronously, so that the memory device and the data processing apparatus operate at different operating frequencies. As a result, when the optimum operating frequency of the memory device is different from that of the data processing apparatus, both devices can operate at their optimum operating frequencies.

In the above data processing apparatus, the plurality of master devices may be connected to a control bus, and when one of the plurality of master devices issues a data write request, data is written to an area in the memory device and an entry address of the area is transferred to the control bus, the entry address being the start address of the area, and at least one other master device requests to read data from a location indicated by the entry address.

With the above construction, it is possible for one master device to use the data another master device has written to the memory device.

In the above data processing apparatus, the plurality of master devices may be connected to a control bus, and when one of the plurality of master devices issues a data write request, data is written to an area in the memory device and an end address of the area is transferred to the control bus, and at least one of the others of the plurality of master devices requests to write data to a location starting from an address following the end address transferred to the control bus.

With the above construction, the write end address of a data writing performed by a master device can be transferred through the control bus to another master device that is to perform a data writing next. The other master device can write data to a location specified by an address following the received end address. This improves the memory device use efficiency compared to a case where the write destination areas in the memory device are fixed.

The above data processing apparatus may further comprise: an address server which prestores use state information indicating whether each of a plurality of areas in the memory device is used or empty, and when one of the plurality of master devices issues a data write request to write data to the memory device, informs the master device having issued the data write request of empty areas in the memory device by referring to the use state information.

With the above construction in which the entry table is used to manage the use state of the areas in the memory device, a master device, when writing data to the memory device, can obtain a write destination address from the address server by asking entry addresses of empty areas. That is to say, each master device needs not search for empty areas. This improves the processing efficiency of the whole data processing apparatus.

### BRIEF DESCRIPTION OF THE DRAWINGS

These and other objects, advantages and features of the invention will become apparent from the following description thereof taken in conjunction with the accompanying drawings which illustrate a specific embodiment of the invention. In the drawings:
FIG. 1A shows an ordinary DMA transfer system;
FIG. 1B shows a technique for assigning the data transfer rate by dividing the bit width;
FIG. 2A shows that a data processing apparatus achieved as a one-chip LSI is embedded into a multimedia-related product together with a memory device;
FIG. 2B shows the data processing apparatus in Embodiment 1;
FIG. 3 is a timing chart showing the data transfer between the external memory 2 and the bus 1;
FIG. 4 is a timing chart showing the operation timing with which the local buffer 13 writes data to the external memory 2;
FIG. 5 is a timing chart showing the operation timing with which the local buffer 13 reads data from the external memory 2;
FIG. 6 is a timing chart showing the operation timing with which the local buffer 14 writes data to the external memory 2;
FIG. 7 is a timing chart showing the operation timing with which the local buffer 14 reads data from the external memory 2;
FIG. 8 shows a circuit construction for achieving the 32-bit buffers 61-64, the buses 10-12, and the connection circuits 20-22 by sharing certain components;
FIG. 9A shows selectors, among the selectors shown in FIG. 8, which are used to read data from the 32-bit buffers 61-64 to the 32-bit buses 57-60;
FIG. 9B shows selectors, among the selectors shown in FIG. 8, which are used to write data from the 32-bit buses 57-60 to the 32-bit buffers 61-64;
FIG. 10A shows the correspondence between the bit widths at the data transfer and the connection lines selected by each of the selector 65 and 66 and gates 67 and 68;
FIG. 10B shows the correspondence between the bit widths at the data transfer and the connection lines selected by the selectors 71-74;
FIG. 11A is a timing chart when the transfer rate on the bus 10 is 32 bits;
FIG. 11B is a timing chart when the transfer rate on the bus 10 is 64 bits;
FIG. 11C is a timing chart when the transfer rate on the bus 10 is 128 bits;
FIG. 12A is a timing chart when the transfer rate on the bus 11 is 32 bits;
FIG. 12B is a timing chart when the transfer rate on the bus 11 is 64 bits;
FIG. 12C is a timing chart when the transfer rate on the bus 11 is 128 bits;
FIG. 13 shows the data processing apparatus in which a plurality of master devices are connected to the bus 10;
FIG. 14 shows the construction of the data processing apparatus including the dual port memory 26;
FIG. 15 shows the construction of the data processing apparatus of Embodiment 4;
FIG. 16 shows an example of the current state bit sequence;
FIG. 17 shows the data processing apparatus in Embodiment 5;
FIG. 18 shows the construction of the data processing apparatus in Embodiment 6;
FIG. 19 shows the construction of the arbiter 112;
FIG. 20 shows an example in which an identification information x of the master device x is stored in m registers out of the n registers;
FIG. 21 shows a memory allocation in the external memory 2 in Embodiment 8;
FIG. 22 shows the internal construction of the data processing apparatus in Embodiment 9;
FIG. 23 shows the internal construction of the data processing apparatus in which connections between the dual port memory 100 and the master devices are omitted;
FIG. 24 shows priority levels of a plurality of master devices;
FIG. 25 shows the construction of the entry areas in Embodiment 9;
FIG. 26A shows the bit assignment in the memory cell for storing the "1 byte = 8 bits plus one sign bit" data;
FIG. 26B shows the bit assignment in the memory cell for storing the "1 byte = unsigned 8 bits plus one bit" data;
FIG. 27 shows how data is written to the external memory 2 depending on the mask bit; and
FIG. 28 shows the data to be stored in the tag area of the dual port memory 100 shown in FIG. 22.

### DESCRIPTION OF THE PREFERRED EMBODIMENTS

The following are description of the data processing apparatus through specific embodiments thereof by way of referring to the drawings. The functions of the data processing apparatus will be described little by little in each embodiment for fear of a mass, complicated presentation.

### 〈Embodiment 1〉

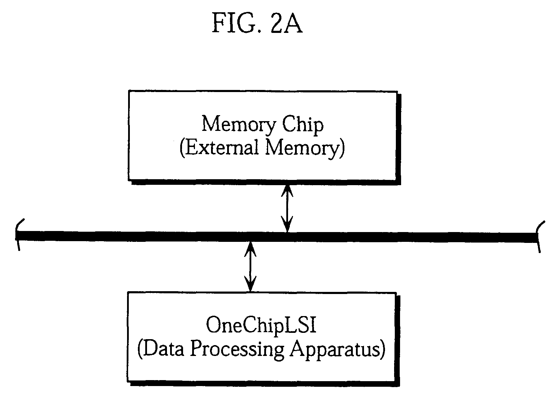

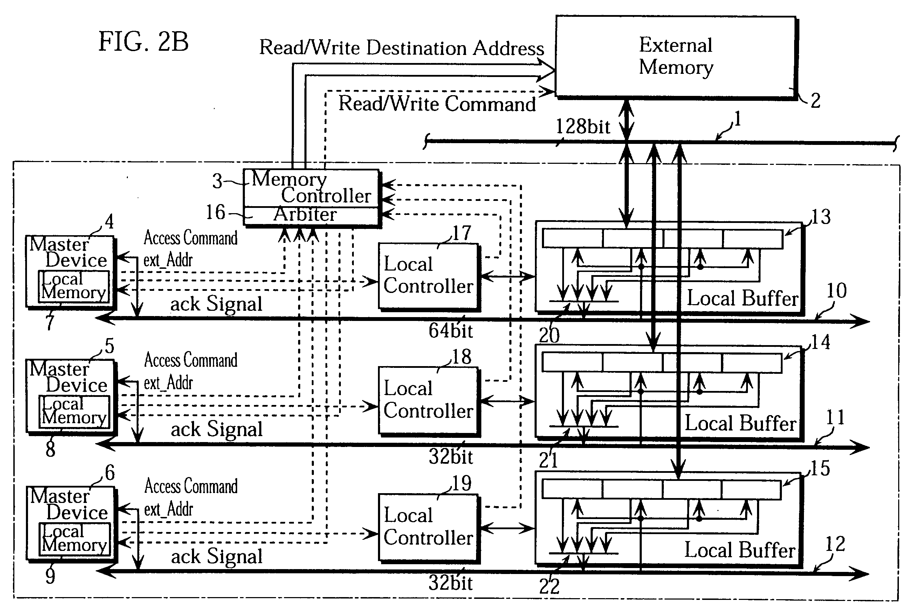

Embodiment 1 relates to a data processing apparatus which is arranged to change the data transfer rates of a plurality of master devices without difficulty. FIG. 2A shows the data processing apparatus. As shown in FIG. 2A, the data processing apparatus is a one-chip LSI, and is mounted on a multimedia-related product together with an external memory 2. FIG. 2B shows the construction of the data processing apparatus having a purpose of allowing the bit width to be assigned without difficulty. FIG. 2B shows only components that are necessary for the above purpose, and omits the others. In FIG. 2B, a section encircled by a center line indicates the data processing apparatus achieved on one chip. As shown in the drawing, the data processing apparatus includes a memory controller 3, master devices 4-6, local memories 7-9, buses 10-12, local buffers 13-15, an arbiter 16, local controllers 17-19, and connection circuits 20-22, and is connected to the external memory 2 via a 128-bit bus 1.

In each embodiment, the transfer rate (band width) requested by each master device is determined by the bit width of the bus and the use frequency of each master device. For example, when there are two buses with the same bit width, and a master device requests a data transfer with a high frequency to one bus and with a low frequency to the other, the former transfer rate is higher than the latter transfer rate. It should be noted here that in the following description and onwards, the use frequency of each master device is not considered for the sake of convenience, but only the bit width of the read/write port is considered for the data transfer rate.

In the media processing, each read/write port has an optimum bit width. However, specific examples of the optimum bit width will not be provided also for the sake of convenience. As a result, in the following description, it is presumed that the bit widths and the transfer rates of the buses 1, 10, 11, 12 are 128 bits, 64 bits, 32 bits, and 32 bits, respectively. The local buffer 13, local controller 17, and connection circuit 20 will be generically called peripheral circuits of the master device 4. Similarly, the local buffer 14, local controller 18, and connection circuit 21 will be generically called peripheral circuits of the master device 5, and the local buffer 15, local controller 19, and connection circuit 22 will be generically called peripheral circuits of the master device 6.

The 128-bit bus 1 performs data transfers between the external memory 2 and each of the local buffers 13-15. In the present embodiment, the bit width of the read/write port of the external memory 2 is 128 bits, the bit width of a read/write port on the side of the external memory 2 in each local buffer is 128 bits, and the data transfer between them is performed at the transfer rate of 128 bits.

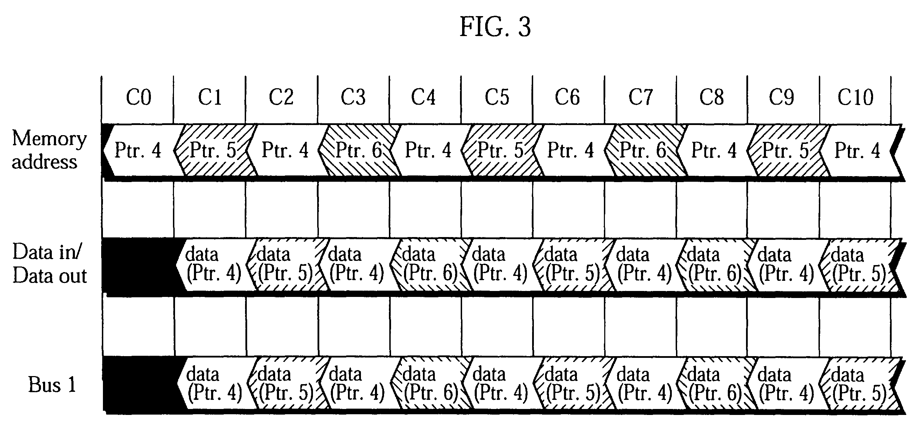

FIG. 3 is a timing chart showing relationships between the bus 1 and the input/output of the external memory 2. The third portion from top of FIG. 3 shows the data transfer in the bus 1. "Data (Ptr.4)" appearing therein indicates 128-bit data requested by the master device 4 to be read/written from/to the memory. Similarly, "Data (Ptr.5)" and "Data (Ptr.6)" indicate 128-bit data requested by the master devices 5 and 6 to be read/written from/to the memory, respectively.

It is understood from FIG. 3 that the bus 1 transfers Data (Ptr.4) in cycles C1, C3, C5, C7, and C9, Data (Ptr.5) in cycles C2, C6, and C10, and Data (Ptr.6) in cycles C4 and C8. That means Data (Ptr.4) is transferred every two cycles, and Data (Ptr.5) and Data (Ptr.6) are transferred every four cycles. As understood from this, the bus 1 transfers data requested by the master devices 4-6 with time division multiplexing.

The external memory 2 includes a work area used by the master devices 4-6 and a 128-bit read/write port. When receiving a read command, a read destination address, and a length of the data to be read from the memory controller 3, the external memory 2 outputs the data to the bus 1. When receiving a write command and a write destination address from the memory controller 3, the external memory 2 writes the data having been output to the bus 1 into itself at a location specified by the write destination address.

The memory controller 3 controls data reading/writing from/to the external memory 2. For the data reading, the memory controller 3 issues a read command, a read destination address, and a length of the data to be read to the external memory 2 to allow the external memory 2 to output the specified data to the bus 1. For the data writing, the memory controller 3 issues a write command and a write destination address to the external memory 2 to allow the external memory 2 to write the data having been output to the bus 1 into itself at a location specified by the write destination address. The memory controller 3 performs these data reading/writing controls in accordance with the read/write requests from the master devices. For this reason, the memory controller 3 has a plurality of pointers and an incrementer. The plurality of pointers correspond to the master devices 4 to 6, and store read/write destination addresses sent from the master devices 4 to 6. The incrementer increment an address stored in a pointer corresponding to one of the master devices 4 to 6 when the master device issues a read command or a write command.

Now, with what timing the read/write requests issued from the master devices 4 to 6 to the external memory 2 are processed will be described with reference to the timing chart shown in FIG. 3.

The first portion from top of FIG. 3 shows addresses output to the external memory 2. The second portion shows data output from the external memory 2. As understood from the first portion, the memory controller 3 outputs a read command and a read destination address issued from the master device 4 to the external memory 2 at cycles C0, C2, C4, C6, C8, and C10, and outputs a read command and a read destination address issued from the master device 5 at cycles C1, C5, and C9, and outputs a read command and a read destination address issued from the master device 6 at cycles C3 and C7. This is because, as described earlier, Data (Ptr.4) is transferred every two cycles, and Data (Ptr.5) and Data (Ptr.6) are transferred every four cycles.

The master device 4 includes a local memory 7 and a 64-bit read/write port, and issues access commands to the memory controller 3 requesting data reading/writing. When requesting data reading, the master device 4 issues an access command to the memory controller 3 to read data from the external memory 2, then waits for the data to be transferred from the memory via the bus 1, the local buffer 13, and the bus 10. The master device 4 sequentially stores the transferred data into the local memory 7.

When requesting data writing, the master device 4 issues an access command to the memory controller 3 to write data to the external memory 2, and sequentially outputs data to the bus 10 via the local memory 7. The output data is sequentially written into the external memory 2 via the bus 10, the local buffer 13, and the bus 1.

The master device 5 includes a local memory 8 and a 32-bit read/write port, and issues access commands to the memory controller 3 requesting data reading/writing, as the master device 4. The difference from the master device 4 is the data transfer route in the data reading/writing. That is, the master device 5 reads/writes data from/to the external memory 2 via the bus 1, the local buffer 14, and the bus 11.

The master device 6 includes a local memory 9 and a 32-bit read/write port, and issues access commands to the memory controller 3 requesting data reading/writing, as the master device 4. The difference from the master device 4 is the data transfer route in the data reading/writing. That is, the master device 6 reads/writes data from/to the external memory 2 via the bus 1, the local buffer 15, and the bus 12.

The bus 10 is connected to the read/write port of the master device 4 and to the read/write port on the other side of the local buffer 13.

The bus 11 is connected to the read/write port of the master device 5 and to the read/write port on the other side of the local buffer 14.

The bus 12 is connected to the read/write port of the master device 6 and to the read/write port on the other side of the local buffer 15.

The local buffer 13 has two read/write ports to one of which the 128-bit bus 1 is connected, and to the other of which the bus 10 is connected via the connection circuit 20. The local buffer 13 receives through the 128-bit read/write port the data output to the bus 1 from the external memory 2, holds the data, then transfers the data using the bus 10. The local buffer 13 also fetches data from the bus 10, holds and outputs the data to the bus 1. Here, the bit width of the read/write port on the other side of the local buffer 13 is 128 bits at maximum. However, the bit width of the read/write port on the other side of the local buffer 13 is set to 64 bits, which is the same as the read/write port of the master device 4, by placing the connection circuit in between. As a result, the bus 10 transfers data at the transfer rate of 64 bits.

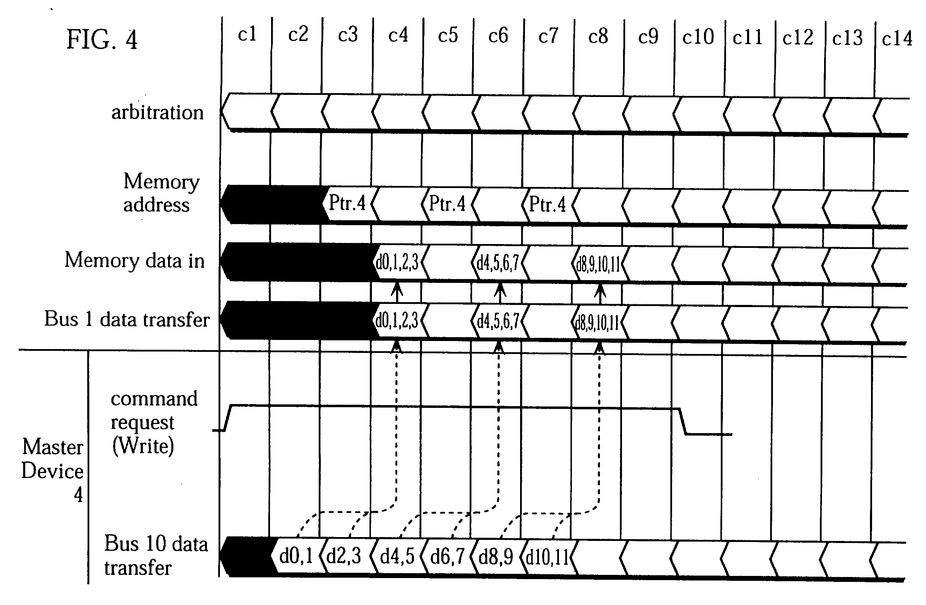

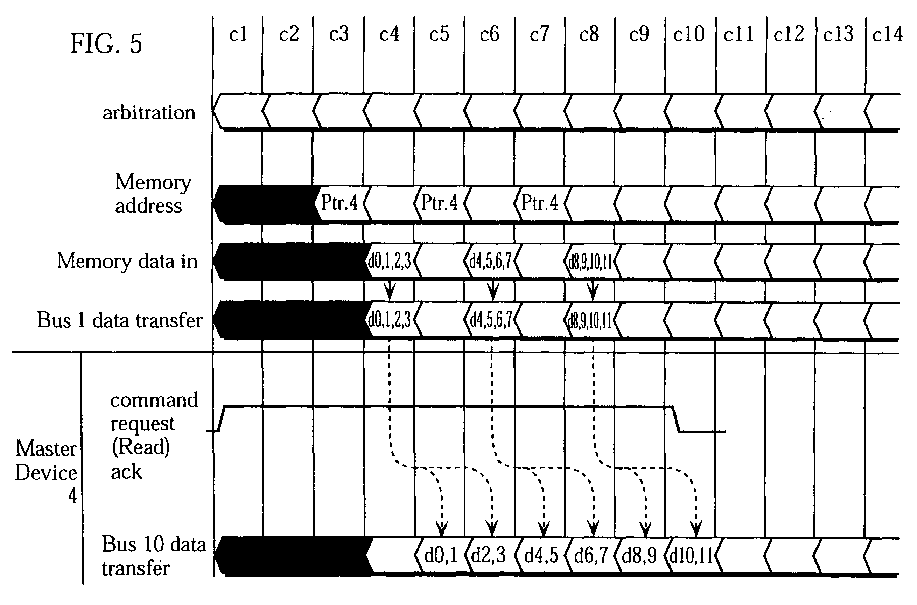

Now, the input/output of the local buffer 13 will be described with reference to FIGs. 4 and 5. FIG. 4 is a timing chart showing the operation timing with which the local buffer 13 outputs data to the external memory 2. FIG. 5 is a timing chart showing the operation timing with which the local buffer 13 inputs data from the external memory 2.

First, the data writing to the external memory 2 by the local buffer 13 will be described with reference to FIG. 4.

At cycle C2 in FIG. 4, the local buffer 13 takes in data "d0" and "d1" from the bus 10 on which the data has been transferred at the rate of 64 bits. Then, at cycle C3, the local buffer 13 takes in data "d2" and "d3" from the bus 10 on which the data has been transferred at the rate of 64 bits. At cycle C4, the local buffer 13 outputs the data d0, d1, d2, and d3 to the bus 1.

Prior to the cycle C4, the memory controller 3 has output the write destination address "Ptr.4" at cycle 3. The data d0, d1, d2, and d3 are written into the external memory 2 at a location specified by address "Ptr.4" from the bus 1 at cycle C4.

The local buffer 13 takes in data "d4" and "d5" from the bus 10 at cycle C4, and data "d6" and "d7" at cycle C5. The data d4, d5, d6, and d7 are output to the bus 1 and written into the external memory 2 at a location specified by address "Ptr.4" at cycle C6.

Secondly, the data reading from the external memory 2 by the local buffer 13 will be described with reference to FIG. 5.

At cycle C3 in FIG. 5, the memory controller 3 transfers a read destination address "Ptr.4" issued from the master device 4 to the external memory. At cycle C4, data d0, d1, d2, and d3 are output to the bus 1 from the external memory at a location specified by the address, transferred through the bus 1 at a transfer rate of 128 bits and taken in by the local buffer 13. The local buffer 13 then outputs data d0 and d1 to the bus 10 at cycle C5, and data d0 and d1 at cycle C6.

At cycle C5 in FIG. 5, the local buffer 13 transfers a read destination address "Ptr.4" issued from the master device 4 to the memory. At cycle C6, data d4, d5, d6, and d7 are output to the bus 1 from the external memory, and taken in by the local buffer 13. The local buffer 13 outputs the data d4 and d5 to the bus 10 at cycle C7, and data d6 and d7 at cycle C8.

As described above, the local buffer 13 uses two cycles to output data to the bus 1 or to take in data from the bus 1. To adjust timing in accordance with this, the memory controller 3 exercises memory access control to output "Data (Ptr.4)" to the bus 1 every two cycles. Such input/output timing of the local buffer 13 enables the difference between the transfer speeds of the bus 1 and bus 10 to be canceled out.

The local buffers 14 and 15 each have two read/write ports to one of which the 128-bit bus 1 is connected, and to the other of which the bus 11 or 12 is connected via the connection circuit 21 or 22. The local buffers 14 and 15 each receive through the 128-bit read/write port the data output to the bus 1 from the external memory 2, hold the data, then transfer the data using the bus 11 or 12. The local buffers 14 and 15 each also fetch data from the bus 11 or 12, holds and outputs the data to the bus 1. Here, the bit width of the read/write port on the other side of the local buffers 14 and 15 is 128 bits at maximum. However, the bit width of the read/write port on the other side of the local buffers 14 and 15 each is set to 32 bits, which is the same as the read/write port of the master devices 4 and 5. As a result, the buses 11 and 12 transfer data at the transfer rate of 32 bits.

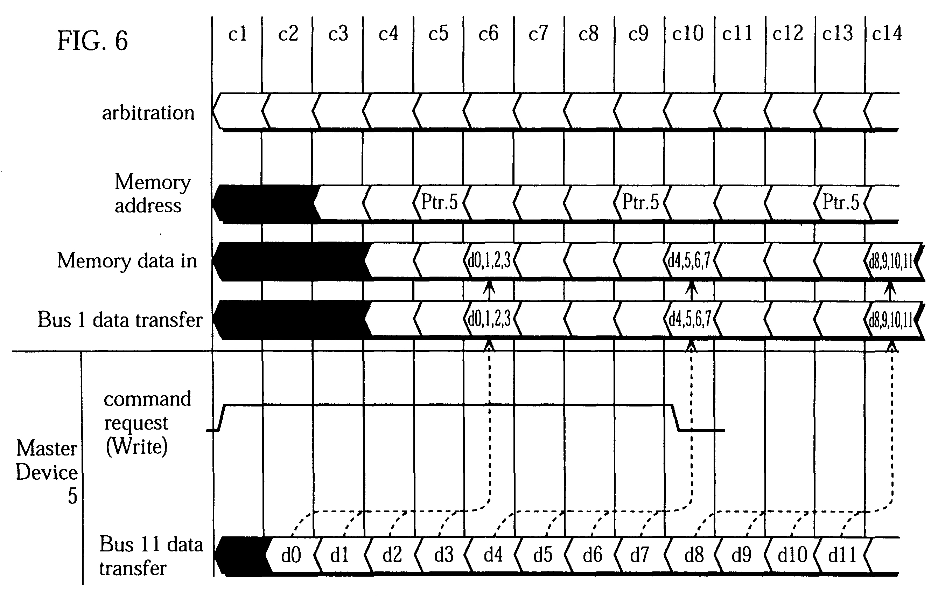

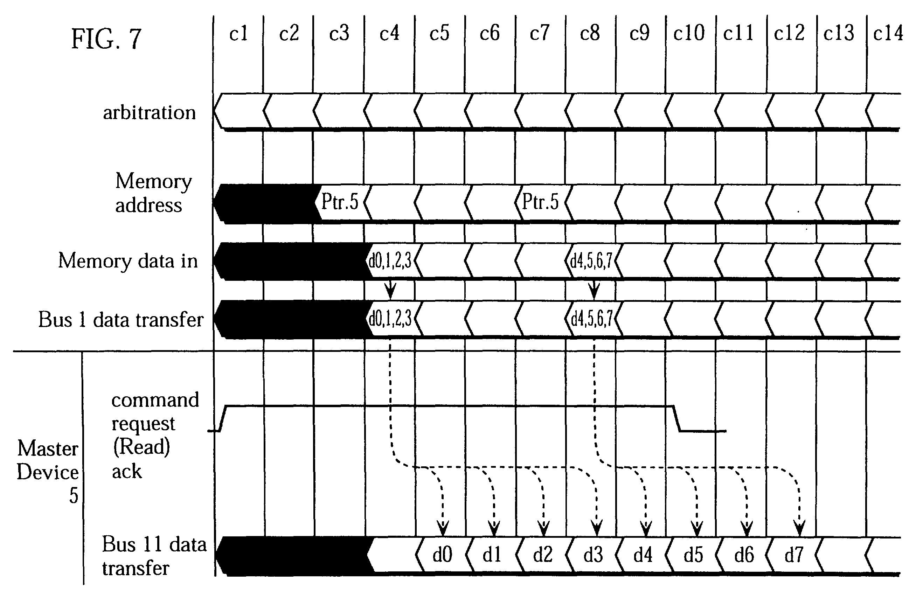

Now, the input/output of the local buffer 14 will be described with reference to FIGs. 6 and 7. FIG. 6 is a timing chart showing the operation timing with which the local buffer 14 outputs data to the external memory 2. FIG. 7 is a timing chart showing the operation timing with which the local buffer 14 inputs data from the external memory 2.

First, the data writing to the external memory 2 by the local buffer 14 will be described with reference to FIG. 6.

The local buffer 14 takes in data "d0" at cycle C2 in FIG. 6, and data "d1" at cycle C3, from the bus 11. Similarly, local buffer 14 takes in data d2 and d3 at cycles C2 and C3, respectively. At cycle C6, the local buffer 14 outputs the data d0, d1, d2, and d3 to the bus 1.

The memory controller 3 outputs the write destination address "Ptr.5" at cycle 5. The data d0, d1, d2, and d3 are written into the external memory 2 at a location specified by address "Ptr.5" from the bus 1 at cycle C6.

The local buffer 14 takes in data "d4" and "d5" from the bus 11 at cycles C6 and C7, and data "d6" and "d7" at cycles C8 and C9. The data d4, d5, d6, and d7 are output to the bus 1 and written into the external memory 2 at a location specified by address "Ptr.5" at cycle C6.

Secondly, the data reading from the external memory 2 by the local buffer 14 will be described with reference to FIG. 7. At cycle C3 in FIG. 7, the memory controller 3 transfers a read destination address "Ptr.5" issued from the master device 5 to the external memory. At cycle C4, data d0, d1, d2, and d3 are output to the bus 1 from the external memory from a location specified by the address, transferred through the bus 1 at a transfer rate of 128 bits and taken in by the local buffer 14. The local buffer 14 then outputs data d0 to the bus 11 at cycle C5, data d1 at cycle C6, data d2 at cycle C7, and data d3 at cycle C8.

At cycle C7 in FIG. 7, the local buffer 14 transfers a read destination address "Ptr.5" issued from the master device 5 to the external memory. At cycle C8, data d4, d5, d6, and d7 are output to the bus 1 from the external memory, and taken in by the local buffer 14. The local buffer 14 outputs the data d4 to the bus 11 at cycle C9, data d5 at cycle C10, data d6 at cycle C11, and data d7 at cycle C12.

As described above, the local buffer 14 uses four cycles to output data to the bus 1 or to take in data from the bus 1. To adjust timing in accordance with this, the memory controller 3 exercises memory access control to output "Data (Ptr.5)" to the bus 1 every four cycles. Such input/output timing of the local buffer 14 enables the bus 1 and bus 11 to transfer data at the same speed.

The arbiter 16 performs an arbitration when a conflict occurs between a plurality of master devices competing for a use of the bus 1. The arbiter 16 then selects one master device to use the bus 1 during the arbitration and outputs an acknowledge signal to the selected master device. For the other master devices that have not been permitted to use the bus 1, the arbiter 16 sets the acknowledge signals for them to inactive, or outputs a hold signal to each of them. With such operations, data writing to a buffer or data reading from a buffer is suspended, and the data transfer is suspended.

As described earlier, in the present embodiment, two cycles out of four are used to transfer "Data (Ptr.4)", and the remaining two cycles are used to transfer "Data (Ptr.5)" and "Data (Ptr.6)", respectively. As a result, any of the master devices 4 to 6 does not wait to use the bus 1.

The local controller 17 controls the local buffer 13 to input/output data from/to the bus 1 and the bus 10. In the operation of writing data to the external memory, the local controller 17 stores 64-bit data on the bus 10 into the local buffer 13 at a location specified by a write pointer. After this, the local controller 17 increments the write pointer by 64 so that the next 64-bit data is stored in a location of the local buffer 13 specified by the incremented write pointer. After the write pointer is updated and the 64-bit data is stored repeatedly for each piece of data output to the bus 10, the local buffer 13 stores 128 bits of data. The 128-bit data is output from the local buffer 13 to the bus 1 and stored in the external memory 2. The above process is repeated when another 64-bit data is output to the bus 10.

In the operation of reading data from the external memory, the local controller 17 stores 128-bit data on the bus 1 into the local buffer 13. The local controller 17 outputs 64 bits out of the 128-bit data from a location of the local buffer 13 specified by a read pointer to the bus 10. After this, the local controller 17 increments the read pointer by 64 so that the next 64-bit data is output to the bus 10. The read pointer is updated and the 64-bit data is output to the bus 10 repeatedly until all the data stored in the local buffer 13 is output to the bus 10 and then to the master device 4. The above process is repeated when another 128-bit data is output to the bus 1.

The local controllers 18 and 19 control the local buffers 14 and 15 in the same way as the local controller 17 to input/output data from/to the bus 1 and the bus 11 and 12, respectively, though the data transfer rate is 32 bits.

The connection circuits 20-22 are used to connect the local buffers 13-15 with the buses 10-12, respectively. The connection circuits 20-22 have the same circuit construction so that if the bit width of the read/write port of each of the buses 10-12 is requested to be changed, it can be changed easily by setting the input/output of a plurality of selectors. As described earlier, in the present embodiment, connection circuits 20-22 are used to adjust the bit width of the read/write port of the local buffers 13-15 to be the same as the master devices 4-6. However, the settings of the bit width can be changed easily by setting the input/output of the plurality of selectors which are included in the connection circuits 20-22.

The present embodiment provides another effect that if there is a possibility of a bus lock occurring to the bus 1 due to a low data transfer rate, the bus lock can be prevented easily by replacing the external memory with another having an interface with a higher data transfer rate and by increasing the bit width of the bus 1, without modifying the master devices 4-6 and the buses 10-12.

As described above, in the present embodiment, the bus 1 is connected to the external memory 2, and data is transferred between the master devices 4-6 and the local buffers 13-15 via the buses 10-12, respectively. With this construction, the data transfer rates of the master devices 4-6 can be changed by changing the bit widths of the master devices 4-6, the buses 10-12, and the read/write ports on the side of the master buses of the local buffers 13-15, and there is no need of re-designing the external memory 2, memory controller 3, and the bus 1. That is to say, since the data transfer rates of the master devices 4-6 can be changed without modifying the external memory 2, the memory controller 3, and the bus 1, the designer does not need to expend much effort in changing the data transfer rate if such necessity arises in future.

### 〈Application Example of Embodiment 1〉

An application example of Embodiment 1 provides a circuit construction for achieving the 32-bit buffers 61-64, the buses 10-12, and the connection circuits 20-22 by sharing certain components.

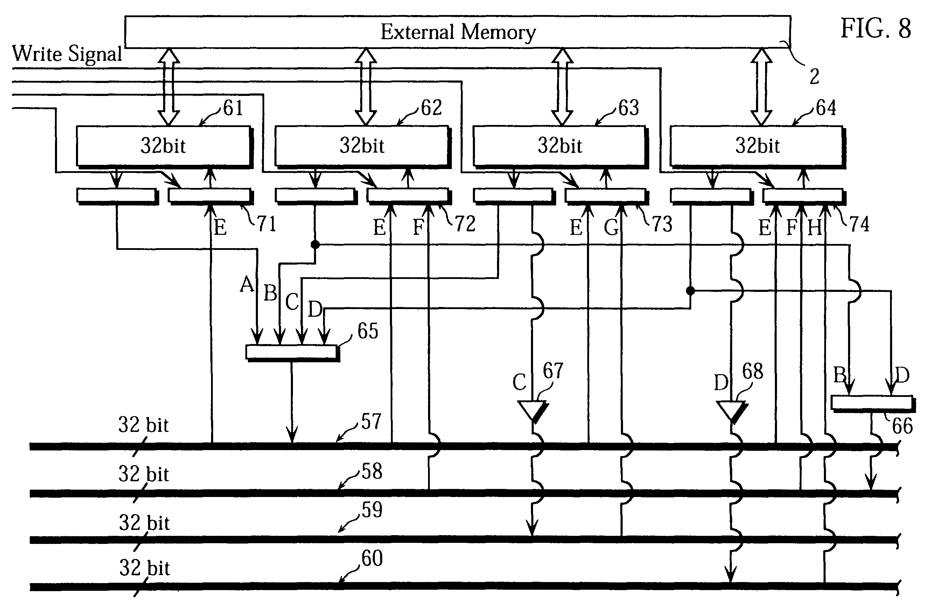

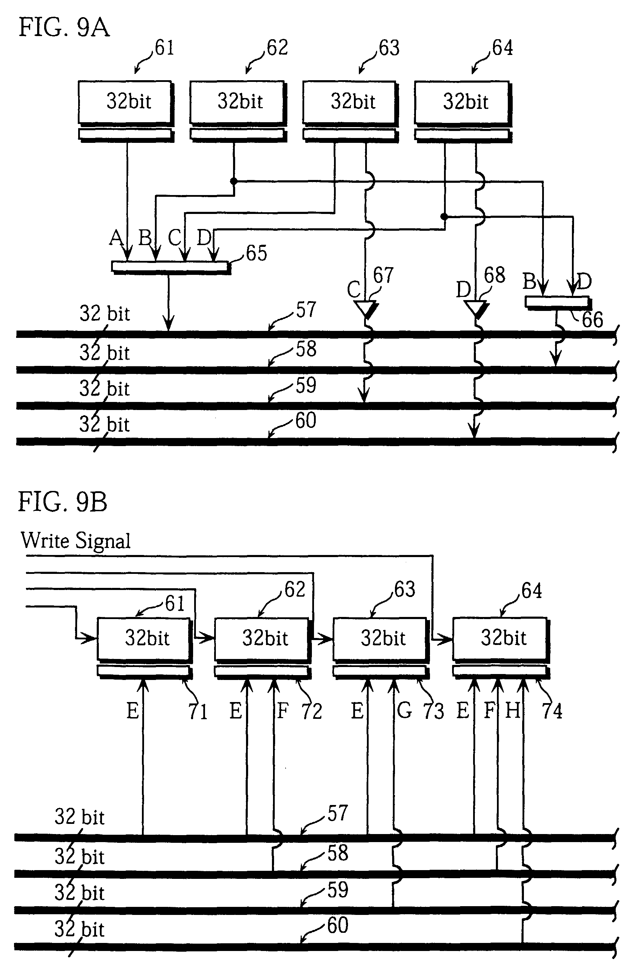

FIG. 8 shows a circuit construction for achieving the 32-bit buffers 61-64, the buses 10-12, and the connection circuits 20-22 by sharing certain components. As shown in FIG. 8, the buses 10-12 are achieved by 32-bit buses 57-60, and the local buffers 13-15 are achieved by 32-bit buffers 61-64. The connection circuits 20-22 are achieved by a 4-input/1-output selector 65, a 2-input/1-output selector 66, a gate 67, a gate 68, and selectors 71-74. FIG. 9A shows selectors, among the selectors shown in FIG. 8, which are used to read data from the 32-bit buffers 61-64 to the 32-bit buses 57-60. FIG. 9B shows selectors used to write data from the 32-bit buses 57-60 to the 32-bit buffers 61-64.

Each of the 32-bit buses 57-60 has a bit width of 32 bits, and is connected to one of the master devices 4-6. Of these, the buses 57 and 58 are used for the data transfer with the bit width of 64 bits, and buses 59 and 60 are each used for the data transfer with the bit width of 32 bits.

The 32-bit buffers 61-64 each store 32 bits of data, and when put together, store 128 bits of data.

The 4-input/1-output selector 65, a 2-input/1-output selector 66, a gate 67, a gate 68, and selectors 71-74 are used to select one of the bit widths of 32, 64, and 128 bits for each input/output of data through the 32-bit buses 57-60.

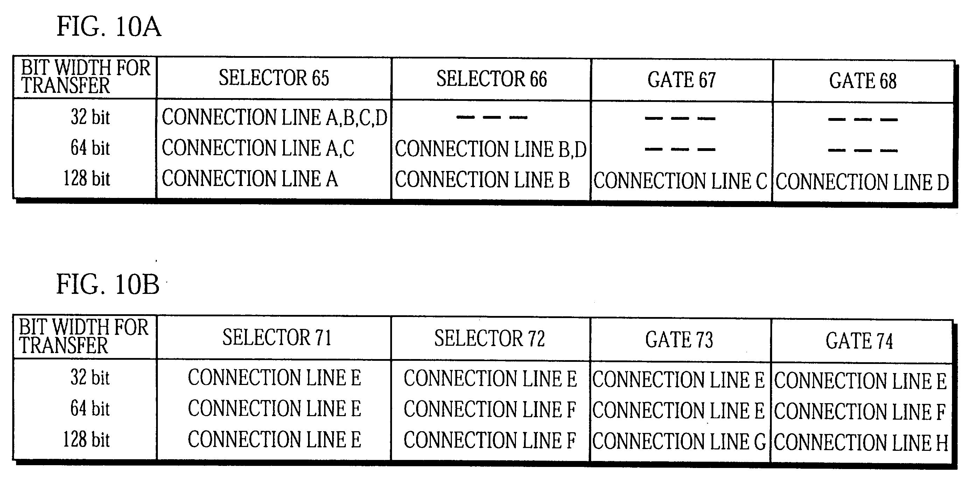

FIGs. 10A and 10B show the input/output of the selectors and the gates. FIG. 10A shows the correspondence between the bit widths at the data transfer and the connection lines selected by each of the selector 65 and 66 and gates 67 and 68. As shown in the drawing, the bit width of 32 bits corresponds to connection lines A, B, C, and D in the "SELECTOR 65" column. This indicates that the 4-input/1-output selector 65 outputs the first to the fourth 32-bit data to the bus 57 via the connection lines A to D.

As also shown in FIG. 10A, the bit width of 64 bits corresponds to connection lines A and C in the "SELECTOR 65" column and to connection lines B and D in the "SELECTOR 66" column. This indicates that the 4-input/1-output selector 65 outputs the first and the third 32-bit data to the bus 57 via the connection lines A and C, and that the 2-input/1-output selector 66 outputs the second and the fourth 32-bit data to the bus 58 via the connection lines B and D.

As also shown in FIG. 10A, the bit width of 128 bits corresponds to connection lines A to D respectively appearing in the "SELECTOR 65", "SELECTOR 66", "GATE 67", and "GATE 68" columns. This indicates that these components output the first to the fourth 32-bit data to the buses 57 to 60 via the connection lines A to D, respectively.

Now, the input/output of each of the 4-input/1-output selector 65, 2-input/1-output selector 66, gate 67, and gate 68 will be described.

The 4-input/1-output selector 65 transfers data from the 32-bit buffers 61-64 to the bus 57 sequentially by selecting the connection lines A-D sequentially.

It should be noted here that hereinafter, a part of the 128-bit data ranging from the m^{th} bit from the most significant bit to the n^{th} bit is referred to as bit [m:n].

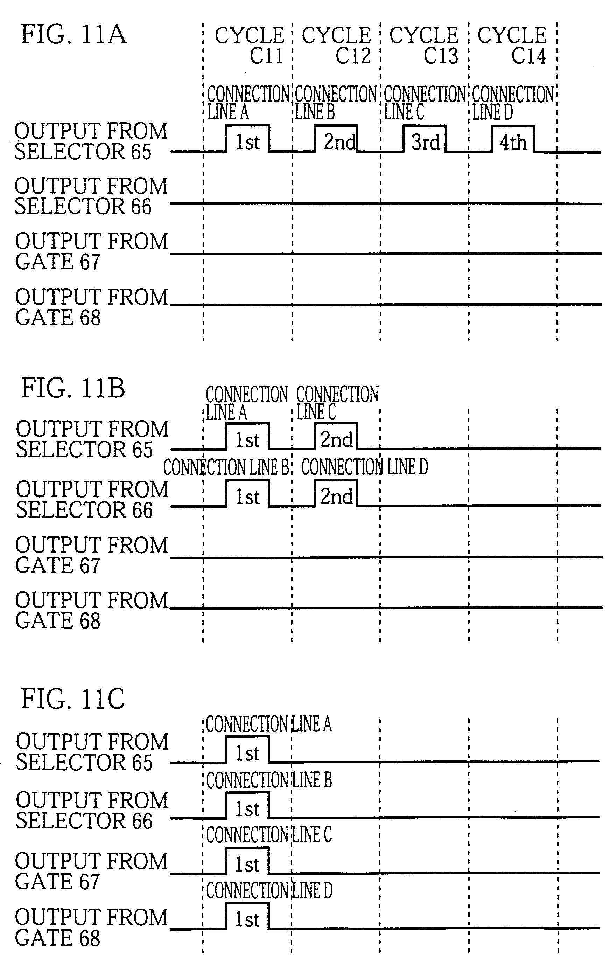

FIG. 11A is a timing chart for the bit width of 32 bits. When data is transferred with the bit width of 32 bits, only the bus 57 is used. For this reason, the 4-input/1-output selector 65 selects connection line A at cycle C11, connection line B at cycle C12, connection line C at cycle C13, and connection line D at cycle C14 and outputs data to the selected connection line at each cycle, as shown in FIG. 11A.

FIG. 11B is a timing chart for the bit width of 64 bits. When data is transferred with the bit width of 64 bits, the buses 57 and 58 are used simultaneously. For this reason, the 4-input/1-output selector 65 selects connection line A and outputs the upper 32-bit data of the first 64-bit data to the connection line A at cycle C11, and selects connection line C and outputs the upper 32-bit data of the second 64-bit data data to the connection line C at cycle C12.

FIG. 11C is a timing chart for the bit width of 128 bits. When data is transferred with the bit width of 128 bits, the buses 57-60 are used simultaneously. For this reason, the 4-input/1-output selector 65 selects connection line A and outputs data to the connection line A at cycle C11.

The 2-input/1-output selector 66 transfers data from the 32-bit buffers 62 and 64 to the bus 57 sequentially by selecting the connection lines B and D sequentially. When data is transferred with the bit width of 64 bits as shown in FIG. 11B, the buses 57 and 58 are used simultaneously. For this reason, the 2-input/1-output selector 66 selects connection line B and outputs the lower 32-bit data of the first 64-bit data to the connection line B at cycle C11, and selects connection line D and outputs the lower 32-bit data of the second 64-bit data to the connection line D at cycle C12. When data is transferred with the bit width of 128 bits, the buses 57-60 are used simultaneously. For this reason, the 2-input/1-output selector 66 selects connection line B and outputs the bit [95:64] of the 128-bit data to the connection line B at cycle C11, as shown in FIG. 11C.

The gate 67 transfers data from the 32-bit buffer 63 to the bus 59 via the connection line C. When data is transferred with the bit width of 128 bits, the buses 57-60 are used simultaneously. For this reason, the gate 67 outputs the bit [63:32] of the 128-bit data to the connection line C at cycle C11 shown in FIG. 11C.

The gate 68 transfers data from the 32-bit buffer 64 to the bus 60 via the connection line D. When data is transferred with the bit width of 128 bits, the buses 57-60 are used simultaneously. For this reason, the gate 68 outputs the bit [31:0] of the 128-bit data to the connection line D at cycle C11 shown in FIG. 11C.

Now, the selectors 71-74 shown in FIG. 9B will be described.

FIG. 10B shows the correspondence between the bit widths at the data transfer and the connection lines selected by the selectors 71-74. As shown in the drawing, the bit width of 32 bits corresponds to connection line E in each column of the selectors 71-74. This indicates that the first to the fourth 32-bit data are taken in by the 32-bit buffers 61-64 respectively via the connection line E.

As also shown in FIG. 10B, the bit width of 64 bits corresponds to connection line E in the "SELECTOR 71" and "SELECTOR 73" columns, and to connection line F in the "SELECTOR 72" and "SELECTOR 74" columns. This indicates that the upper 32 bits of the first and second 64-bit data are output to the connection line E, and that the lower 32 bits of the first and second 64-bit data are output to the connection line F. That is to say, with the transfer rate of 64 bits, the first 64-bit data is transferred to the 32-bit buffers 61 and 62 via the connection lines E and F, and the second 64-bit data is transferred to the 32-bit buffers 63 and 64 via the connection lines E and F.

As also shown in FIG. 10B, the bit width of 128 bits corresponds to connection line E in the "SELECTOR 71" column, connection line F in the "SELECTOR 72" column, connection line G in the "GATE 73" column, and connection line H in the "GATE 74" column. This indicates that since the buses 57-60 are simultaneously used to transfer data, the bit [127:96] of the 128-bit data is transferred through the connection line E, the bit [95:64] through the connection line F, the bit [63:32] through the connection line G, and the bit [31:0] through the connection line H. These pieces of data are then taken in by the 32-bit buffers 61-64, respectively.

The selector 71 stores the first portion of the 128-bit data from the buses 57-60 into the 32-bit buffer 61.

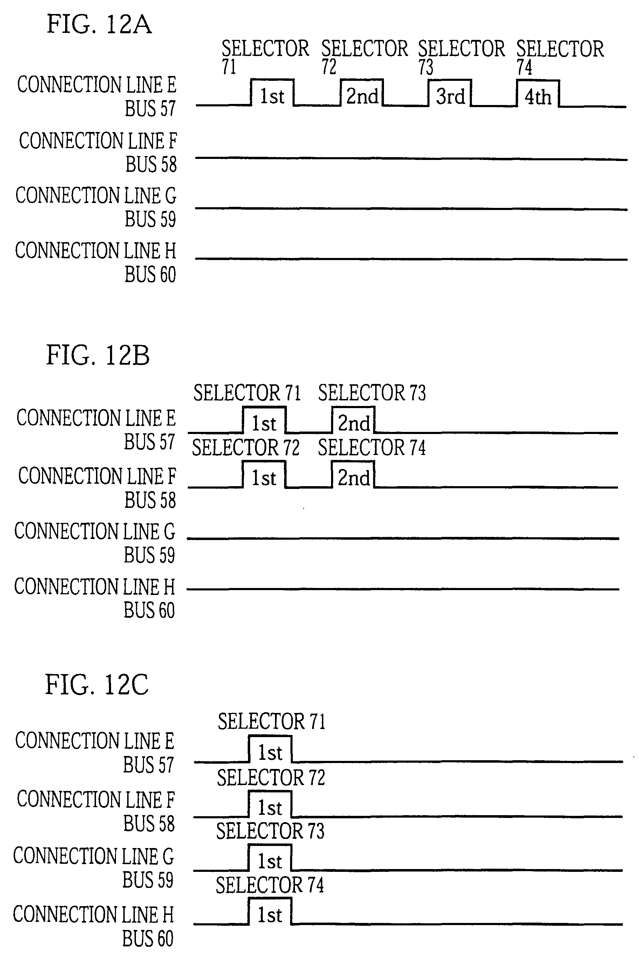

FIG. 12A is a timing chart showing the case where the first to the fourth 32-bit data are transferred to the bus 57. As understood from the drawing, the selector 71 allows the buffer 61 to take in only the first 32-bit data. FIG. 12B is a timing chart showing the case where the upper 32 bits of the first and second 64-bit data are transferred to the bus 57 and the lower 32 bits of the first and second 64-bit data are transferred to the bus 58. Also from this drawing, it is understood that the selector 71 allows the buffer 61 to take in only the first (upper) 32-bit data of the first 64-bit data. FIG. 12C is a timing chart showing the case where the bit [127:96] of the 128- bit data is transferred to the bus 57, the bit [95:64] to the bus 58, the bit [63:32] to the bus 59, and the bit [31:0] to the bus 60. This drawing also shows that the selector 71 allows the buffer 61 to take in only the first 32-bit data (bit [127:96]).

The 2-input/1-output selector 72 selects connection lines E and F and outputs the bit [95:64] out of the 128 bits transferred from the buses 57-60 to the buffer 62. In FIG. 12A, the 2-input/1-output selector 72 outputs second 32-bit data to the 32-bit buffer 62 via the connection line E. In FIG. 12B, the 2-input/1-output selector 72 outputs the lower 32-bit data out of the first 64-bit data to the 32-bit buffer 62 via the connection line F. In FIG. 12C, the 2-input/1-output selector 72 outputs the bit [95:64] out of the 128 bits to the 32-bit buffer 62 via the connection line F.

The selector 73 selects connection lines E and G and outputs the bit [63:32] out of the 128 bits transferred from the buses 57-60 to the buffer 63. In FIG. 12C, the selector 73 outputs the bit [63:32] out of the 128 bits transferred from the buses 59 to the 32-bit buffer 63 via the connection line G.

The selector 74 selects connection lines E, F, and H and outputs the bit [31:0] out of the 128 bits transferred from the buses 57-60 to the buffer 64. In FIG. 12C, the selector 74 outputs the bit [31:0] out of the 128 bits transferred from the buses 60 to the 32-bit buffer 64 via the connection line H.

It should be noted here that in the present application example, since the buffers 61-64 each have the bit width of 32 bits, the data transfer rate (bit width) can be set to an integral multiple of 32 (bits). When the bit width of the buffers 61-64 is 8 bits, the data tranfer rate can be set to an integral multiple of 8 (bits). Similarly, when the bit width of the buffers 61-64 is 16 bits, the data tranfer rate can be set to an integral multiple of 16 (bits). As understood from this, the bit width of the buffers 61-64 may be determined in accordance with the data transfer rate for each master device.

### 〈Embodiment 2〉

In Embodiment 1, the master devices 4-6 are connected to the buses 10-12, respectively. In Embodiment 2, a plurality of master devices are connected to the bus 10.

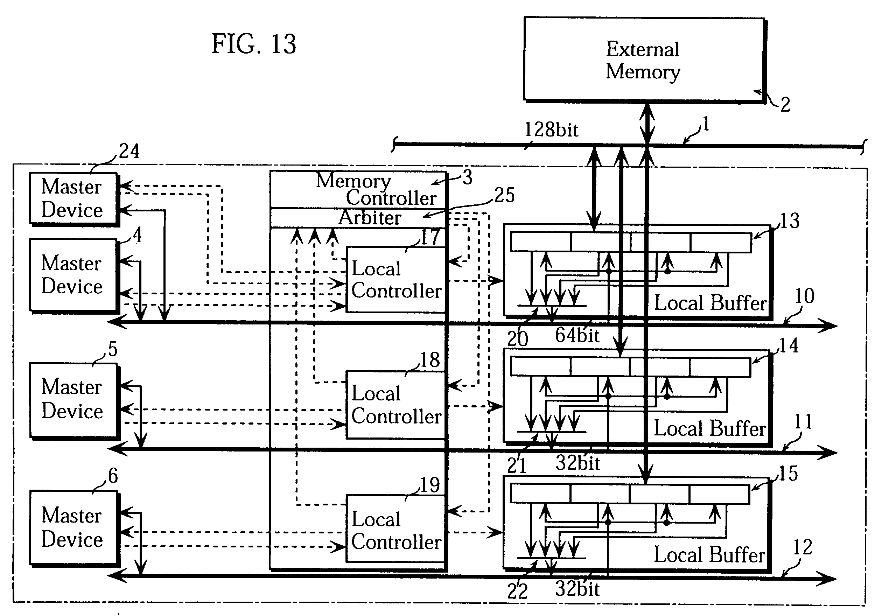

FIG. 13 shows the data processing apparatus in which a plurality of master devices are connected to the bus 10. As shown in the drawing, the bus 10 is connected to a master device 24, as well as to the master device 4.

An application program running in the master device 24 requests DMA transfers with the same data transfer rate as the master device 4, and outputs a DMA transfer request to the local controller 17 when accessing the external memory 2.

The arbiter 25 arbitrates between the master devices 4 and 24 to give one of them the right to use the bus 10 by sending an acknowledge signal. Either the master device 4 or 24 that has been given the bus use right performs the DMA transfer with the external memory 2, in the same way as Embodiment 1. For the other master device that have not been permitted to use the bus 10, the arbiter 25 sets the acknowledge signal to inactive, or outputs a hold signal. This suspends the data transfer to the bus. The effects of the present embodiment may be obtained by disposing an arbiter dedicated to each bus (in the case of the present embodiment, the bus 10) instead of using an arbiter for a plurality of buses, and allowing the dedicated arbiter to perform the above access right control. In this case, the same effects can be obtained with a simple construction of the arbiter.

As described above, in the present embodiment, when a plurality of master devices are used to perform a plurality of types of media processing classified as sub-systems such as audio data, sub-picture data, OSD, etc., the plurality of master devices are related to one bus (bus 10) and one local buffer (local buffer 13). With such a construction, the system can be simplified even if a lot of types of media processing classified as sub-systems.

### 〈Embodiment 3〉

In Embodiment 3, the data processing system and the external memory 2 are controlled asynchronously. Such an asynchronous control of the data processing system and the external memory 2 is required for the following reasons. When the master devices 4-6 perform the media processing, the data processing apparatus needs to operate synchronously with the display apparatus. As a result, the master devices 4-6, the memory controller 3, the local controllers 17-19 of the data processing apparatus need to operate at an operating frequency determined based on the display period of the display apparatus. The external memory 2, on the other hand, operates at an optimum operating frequency which is defined in the hardware specifications. In this way, the data processing apparatus and the external memory 2 have different optimum operating frequencies. This requires the asynchronous control of the data processing apparatus and the external memory 2.

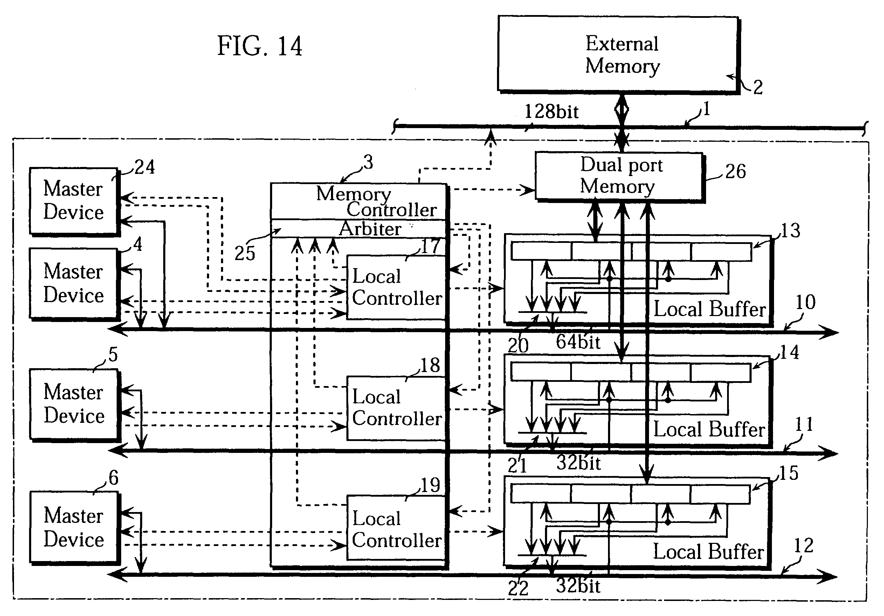

FIG. 14 shows the construction of the data processing apparatus for the asynchronous control. As shown in FIG. 14, the data processing apparatus of the present embodiment newly includes a dual port memory 26.

The dual port memory 26 is connected to the external memory 2 through one port thereof, and is connected to the local buffers 13-15 through other three ports thereof. The dual port memory 26 stores data read out from the external device 2 and stores data output from the local buffers 13-15.

In Embodiment 3, the master devices 4-6 obtain data from the external memory 2 by issuing the read request in two stages. In the first stage, the master devices 4-6 output the read request to the memory controller 3 via the local controllers 17-19 so that data is read out from the external memory 2 to the dual port memory 26. In the second stage, data is transferred from the dual port memory 26 to the master devices 4-6 via the local buffers 13-15. When the dual port memory 26 has taken in all the requested data, the memory controller 3 outputs a read acknowledge signal to the local controllers 17-19. Upon the receipt of the read acknowledge signal, the local controllers 17-19 transfer data from the dual port memory 26 to the master devices 4-6 via the local buffers 13-15, respectively.

The master devices 4-6 write data to the external memory 2 by issuing the write request in two stages. In the first stage, the master devices 4-6 write data to the dual port memory 26 via the local buffers 13-15 under control of the corresponding local controllers. In the second stage, the local controllers 17-19 request the memory controller 3 to instruct the dual port memory 26 to write its data to the external memory 2.

Upon receipt of a data read request from one of the master devices 4-6, the memory controller 3 issues a request to obtain a read/write port of the dual port memory 26. The memory controller 3 issues a read command to the external memory 2 after a read/write port has been obtained. With the issuance of the read command, the requested data is read out from the external memory 2 to the dual port memory 26. The memory controller 3 waits for the data reading to complete, and returns the read acknowledge signal to the corresponding local controller after the dual port memory 26 has taken in all of the requested data.

After a data write request is issued from one of the master devices 4-6, and after the data to be written to the external memory 2 has been taken in by the corresponding one of the local buffers 13-15, the memory controller 3 issues a request to obtain a read/write port of the dual port memory 26. The memory controller 3 writes data from the local buffer to the dual port memory 26 after a read/write port has been obtained. The memory controller 3 issues a write command to the external memory 2 after the data to be written to the external memory 2 has been accumulated in the dual port memory 26. This allows the data preserved in the dual port memory 26 to be written to the external memory 2.

As described above, the present embodiment achieves an asynchronous control of the data transfer inside the data processing apparatus and the data transfer between the data processing apparatus and the external memory 2 by using a dual port memory which is connected to the external memory 2 through one port thereof, and is connected to the local buffers 13-15 through other three ports thereof. This enables the external memory 2 and the data processing apparatus to operate at different operating frequencies. In other words, if the external memory 2 is replaced with another having a different operating frequency, internal data transfers can be performed in the same way as before.

With the above construction, when the number of the internal memories (on-chip memories) increases, the data transfer between the external memory and the internal memories is performed in the same way as before. That means it is also possible to install additional memories (on-chip memories) into the data processing apparatus. With such a construction, the memory architecture can be designed more flexibly.

### 〈Embodiment 4〉

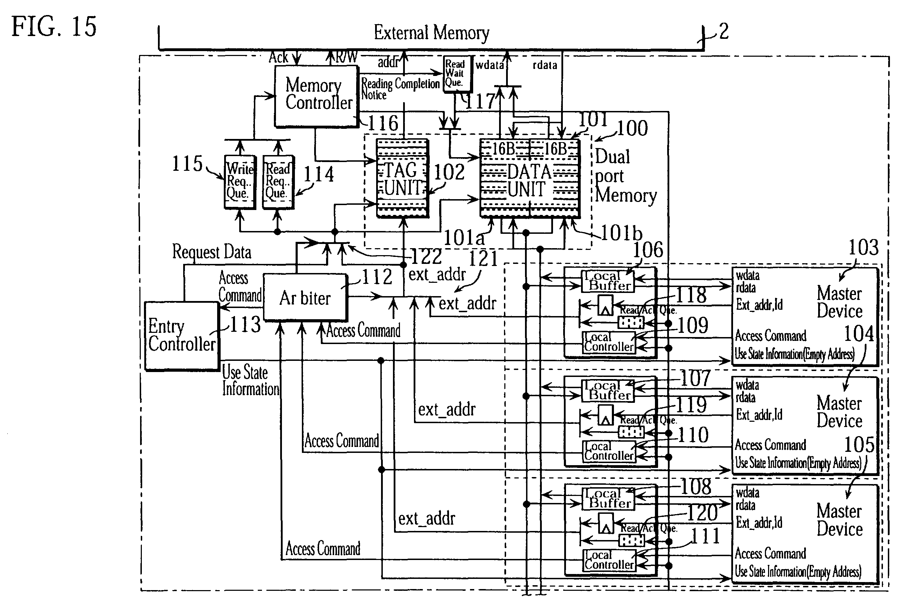

In Embodiment 4, an entry controller 113 manages the data transfers between the master devices and the external memory via a dual port memory 100. FIG. 15 shows the construction of the data processing apparatus of Embodiment 4. As shown in FIG. 15, the data processing apparatus includes the dual port memory 100 composed of a data unit 101 and a tag unit 102, master devices 103-105, local buffers 106-108, local controllers 109-111, an arbiter 112, an entry controller 113, a read request queue 114, a write request queue 115, a memory controller 116, a read wait queue 117, read acknowledge queues 118-120, and address selection circuits 121 and 122.

The dual port memory 100 includes the data unit 101 and the tag unit 102. The data unit 101 is composed of two bank areas 101a and 101b. Each of the bank areas 101a and 101b includes 512 16-byte entry areas. Of the 512 entry areas, 24 entry areas are FIFO areas which are used as input/output buffers for preserving data in the middle of transfers between the external memory 2 and the master devices 103-105. Some of the 512 16-byte entry areas are used as work areas by the master devices. An entry address "Entr_Addr" is assigned to each entry area. The entry addresses are used to access the entry areas (a common entry address "Entr_Addr" is shared by two entry areas of the bank areas 101a and 101b). Of the 24 FIFO areas, eight FIFO areas are used for reading data from the external memory 2, and 16 FIFO areas are used to write data to the external memory 2. Each entry area includes 16 1-byte memory cells. That means each entry area can store 16 bytes of data at maximum.

The tag unit 102 includes 512 entries. The 512 entries of the tag unit 102 correspond to the entry areas of the data unit 101. Each entry of the tag unit 102 has an external address "Ext_Addr" (a read destination address or a write destination address) and ID information concerning a master device that has requested to access a location indicated by the external address "Ext_Addr". The same entry addresses "Entr_Addr" as are assigned to the entry areas of the data unit 101 are assigned to the entries of the tag unit 102. When data is transferred between the external memory and the dual port memory 100, the entry addresses "Entr_Addr" are specified as the access destinations in the accesses to the dual port memory 100.

The master devices 103-105 issue access commands to read data from the external memory 2, or to write data to the external memory 2. Such data readings or data writings include: data transfers between the FIFO areas of the dual port memory 100 and the external memory 2; and data transfers between the FIFO areas of the dual port memory 100 and the master devices 103-105. In both data reading and data writing, the FIFO areas of the dual port memory 100 are used. Therefore, the master devices 103-105 issue access commands only when there are empty FIFO areas in the dual port memory 100. Whether there are empty FIFO areas is indicated by the use state information output from the entry controller 113. The master devices 103-105 monitor the use state information output from the entry controller 113 when they are to issue an access command. When the use state information indicates that there is no empty FIFO area, the master devices 103-105 wait for an empty FIFO area to be generated. The master devices 103-105 do not issue an access command until one or more empty FIFO areas are generated.

The local buffers 106-108 correspond to the master devices 103-105, respectively. The local buffers 106-108 store: data "rdata" which has been read from the external memory 2 and preserved in the dual port memory 100; and data "wdata" which is to be written to the external memory 2 via the dual port memory 100. It is possible to cancel out the difference between the bit width of 16 bits of the bus dual port memory 100 and the bit width of the buses to the master devices 103-105 by using the local buffers 106-108. The local buffers 106-108 may be double buffers so that accesses to the master devices 103-105 and accesses to the dual port memory 100 are processed in parallel. This will increase the data transfer speed. With this construction, if part of the master devices 103-105 requests a high-speed data transfer, data input/output can be performed to attain the requested high-speed data transfer.

The local controllers 109-111 correspond to the master devices 103-105, respectively. The local controllers 109-111 control transfers of the "rdata" and "wdata" between the local buffers 106-108 and the FIFO areas of the dual port memory 100.

With the above construction, data is written to the external memory 2 as follows. The local controllers 109-111 refer to the use state information to identify the locations of empty FIFO areas, where the use state information monitored by the master devices 103-105 includes entry addresses "Entr_Addr" of empty FIFO areas of the dual port memory 100. The local controllers 109-111 then accumulate the data "wdata", which is to be written to the external memory 2 later, in the empty FIFO areas.

Data is read from the external memory 2 as follows. The local controllers 109-111 refer to a reading completion notice to identify the locations of FIFO areas storing the data read out from the memory device, where the reading completion notice is issued by the memory controller 116, and transferred to the read acknowledge queues 118-120 via the read wait queue 117. The local controllers 109-111 extract entry addresses "Entr_addr" from the reading completion notice to identify the locations of FIFO areas storing the "rdata". The "rdata" is then transferred from the FIFO areas to the local buffers 106-108, then to the corresponding master devices 103-105.

The arbiter 112 performs an arbitration when a conflict occurs between the master devices 103-105 competing for a use of the dual port memory 100. The following is description of the reasons why the arbiter 112 performs an arbitration. As described earlier, data is transferred between the external memory 2 and the master devices via the dual port memory 100. In such data transfers, the data transfers between the dual port memory 100 and the local buffers 106-108 are the densest. Taking this into consideration, in the present embodiment, the arbiter determines a master device that can use the dual port memory 100. When a plurality of master devices among the master devices 103-105 issue access commands, the arbiter 112 permits one of them to transfer data via the dual port memory 100, and rejects the other master devices. This allows data to be effectively transferred via the dual port memory 100.

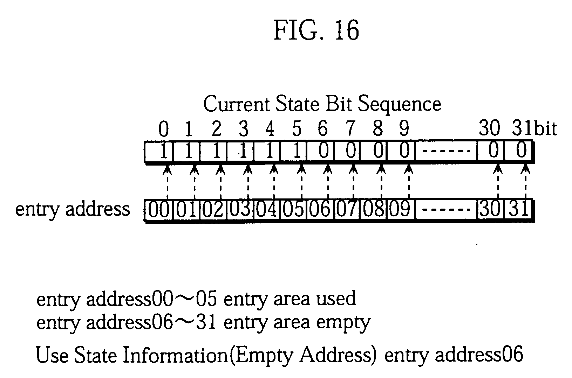

The entry controller 113 includes a bit sequence (current state bit sequence) which indicates whether each of the FIFO areas currently stores data, or not. When all bits in the current state bit sequence are "on" ("1"), the entry controller 113 sends to each master device the use state information indicating that there is no empty FIFO area. When any bits in the current state bit sequence are "off" ("0"), the entry controller 113 sends to each master device entry addresses "Entr_Addr" corresponding to the "off" bits as the use state information. FIG. 16 shows an example of the current state bit sequence. In FIG. 16, the current state bit sequence has 32 bits. Of the 32 bits, the bits 0 to 5 correspond to entry addresses "Entr_Addr 00" to "Entr_Addr 05", and the bits 6 to 31 correspond to entry addresses "Entr_Addr 06" to "Entr_Addr 31". In FIG. 16, the bits 0 to 5 are set to "1" ("on"), and the bits 6 to 31 are set to "0" ("off"). This means that the FIFO areas specified by the entry addresses "Entr_Addr 00" to "Entr_Addr 05" are currently used, and that the FIFO areas specified by the entry addresses "Entr_Addr 06" to "Entr_Addr 31" are empty (not used).

As described above, in this example, the FIFO areas specified by the entry addresses "Entr_Addr 06" to "Entr_Addr 31" are empty. The entry controller 113 therefore sends the first empty address (in this example, "Entr_Addr 06" corresponding to the first bit of the "off" bits) to each master device as the use state information.

Now, the process of assigning empty FIFO areas to the master device 103 will be described in detail. Suppose that the master device 103 refers to the use state information and issues an access command. Then, when the arbiter 112 permits the master device 103 to transfer data via the dual port memory 100, stores request data (read request data or write request data) including an entry address "Entr_Addr" of the transfer destination or the transfer source into the read request queue 114 or the write request queue 115. The request data (read request data or write request data) in the present embodiment differs from the access command in that it includes an entry address "Entr_Addr" of the dual port memory 100. As described earlier, an entry of the tag unit 102 corresponding to the entry area specified by the entry address "Entr_Addr" has an external address "Ext_Addr" specifying an access destination location in the external memory 2. The memory controller 116 performs a data transfer between the specified entry area and the area in the external memory 2 specified by the external address. In this way, the data reading from the external memory 2 to the dual port memory 100 and the data writing from the dual port memory 100 to the external memory 2 are achieved.

The request data is generated and issued by the entry controller 113. The issued request data is divided into the read request data and the write request data, and accumulated in the read request queue 114 and the write request queue 115, respectively.

Having issued request data to the memory controller 116, the entry controller 113 sets the bits in the current state bit sequence corresponding to the entry areas specified by the issued request data, to "used". The entry controller 113 also stores an external address "Ext_Addr" issued by the master device 103 in a tag area corresponding to the entry address "Entr_Addr" included in the request data. With these processes, the FIFO areas are allocated to the data transfer request issued by the master device 3 to store data having been read from or to be written to the external memory 2 (rdata or wdata).

The FIFO areas are released as follows. When a read request is issued, data is read out from the external memory 2 to the FIFO areas. The entry controller 113 then waits for the data to be transferred from the FIFO areas to a master device. After the data transfer ends, the entry controller 113 updates the bits in the current state bit sequence corresponding to the FIFO areas, from "used" to "empty" since there is no need of storing the data in the FIFO areas after the data transfer is completed.

After a write request is issued and data is written from a master device to the FIFO areas, the entry controller 113 waits for the data to be transferred from the FIFO areas of the dual port memory 100 to the external memory 2. After the data transfer ends, the entry controller 113 updates the bits in the current state bit sequence corresponding to the FIFO areas, from "used" to "empty".

As described above, the use state of each FIFO area is represented by the current state bit sequence in real time since the current state bit sequence is updated in real time.

As described above, since the plurality of FIFO areas are divided into those for data reading and those for data writing, the entry controller 113 allocates empty FIFO areas to the master device 3 taking into consideration whether the master device 3 has issued a data read request or a data write request.

When a master device issues an access command requesting to read data from the external memory 2, the entry controller 113 selects FIFO areas from the FIFO areas for data reading to be used for the requested data transfer, and sends the entry addresses "Entr_addr" of the selected FIFO areas to the master device.

When a master device issues an access command requesting to write data to the external memory 2, the entry controller 113 selects FIFO areas from the FIFO areas for data writing to be used for the requested data transfer, and sends the entry addresses "Entr_addr" of the selected FIFO areas to the master device.

With the above construction in which the FIFO areas are divided into those for data reading and those for data writing, it is possible to prevent one of the data reading processes and the data writing processes from delaying even if the other of them concentrates.

The memory controller 116 takes out a plurality of pieces of request data accumulated in the read request queue 114 and the write request queue 115 one by one, and transfers data between the dual port memory 100 and the external memory 2. When data is to be read from the external memory 2, the memory controller 116 stores the request data in the read wait queue 117. The memory controller 116 then waits for the data to be output from the external memory 2, and stores the output data in the data unit 101 of the dual port memory 100. The memory controller 116 then outputs the request data stored in the read wait queue 117 to the read acknowledge queues 118-120.

The read acknowledge queues 118-120 respectively correspond to the master devices 103-105 and each store the request data related to the corresponding master device among the request data output from the read wait queue 117. Having detected that the request data has been stored in one of the read acknowledge queues 118-120, the corresponding one of the local controllers 109-111 recognizes that the data transfer from the external memory 2 to the dual port memory 100 it requested by issuing the data read command is completed. Having recognized the completion of the data transfer, the one of the local controllers 109-111 issues a read command requesting the data is transferred from the dual port memory 100 to the corresponding one of the master devices 103-105. This allows the data to be transferred to the master device from the dual port memory 100 via the corresponding one of the local buffers 106-108.

The address selection circuit 121 selectively outputs external address "Ext_addr" which is issued by the master devices 103-105 as the access destination in the access command. When the master device 103 issues a request to transfer data between the external memory 2 and the dual port memory 100 and is permitted by the arbiter 112, the address selection circuit 121 stores the external address "Ext_addr" issued by the master device 103 into the tag area. When the master device 103 issues a request to transfer data between the master device 103 and the dual port memory 100 and is permitted by the arbiter 112, the address selection circuit 121 outputs the entry address "Entr_addr" issued by the master device 103 to the data unit 101 so that a data transfer between the data unit 101 and the master device 103 is performed.

The address selection circuit 122 outputs the entry address "Entr_addr" issued by the entry controller 113 to the data unit 101 and the tag unit 102 so that a data transfer between the dual port memory 100 and the external memory 2 is performed. The address selection circuit 122 outputs the entry address "Entr_addr" issued by the master devices 103-105 and received via the address selection circuit 121 to the data unit 101 of the dual port memory 100 so that a data transfer between the dual port memory 100 and the master devices 103-105 is performed.

As described above, it is possible to transfer data between the external memory 2 and the master devices 103-105 via the dual port memory 100.

### 〈Embodiment 5〉

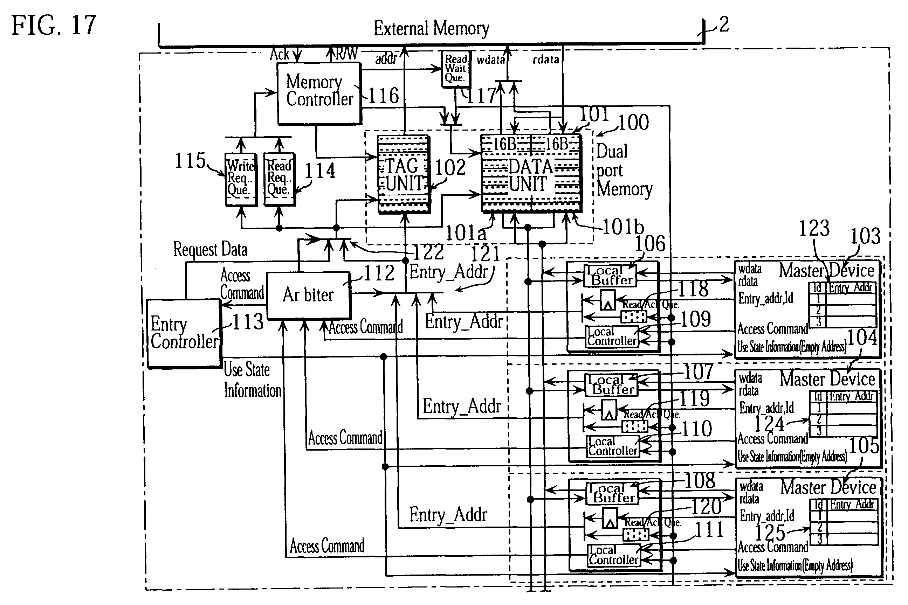

In Embodiment 5, the dual port memory 100 is used as a work area by the master devices 103-105. FIG. 17 shows the data processing apparatus in Embodiment 5.

In Embodiment 5, the master devices 103-105 respectively have entry area tables 123-125 to use the dual port memory 100 as a work area. More specifically, the entry area tables 123-125 shows correspondence between work area entry address "Entr_addr" and master device identification information "Id".

In Embodiment 4, the access command is used to request data reading/writing from/to the external memory 2. However, in Embodiment 5, the access command is used to request to read data from the dual port memory 100 to the master device 103 or to request to write data from the master device 103 to the dual port memory 100, that is, to request data reading/writing from/to the dual port memory 100. In Embodiment 5, therefore, the master device 103 issues the access command requesting the above to the arbiter 112. FIG. 17 therefore shows that each master device issues the entry address "Entr_addr".

The arbiter 112, as in Embodiment 4, judges whether to permit the master devices 103-105 having issued the access command to access the dual port memory 100.

The local controllers 109-111, when the master devices 103-105 issue the access command to access the dual port memory 100 and the arbiter 112 permits the master devices 103-105 to access the dual port memory 100, perform the data transfer between the master devices 103-105 and the entry area specified by the access command. This achieves the data writing from the master devices 103-105 to the entry area, or the data reading from the entry area to the master devices 103-105.

Suppose, for example, that the master device 103 issues the access command requesting to write data to the entry area x which has been assigned to the master device 103, and that the master device 104 issues the access command requesting to read data from the entry area x. This enables the master devices 103 and 104 to exchange data via the entry area x.

As described above, in the present embodiment, it is possible for two master devices to exchange data by reading data from the dual port memory 100 and writing data to the dual port memory 100.

### 〈Embodiment 6〉

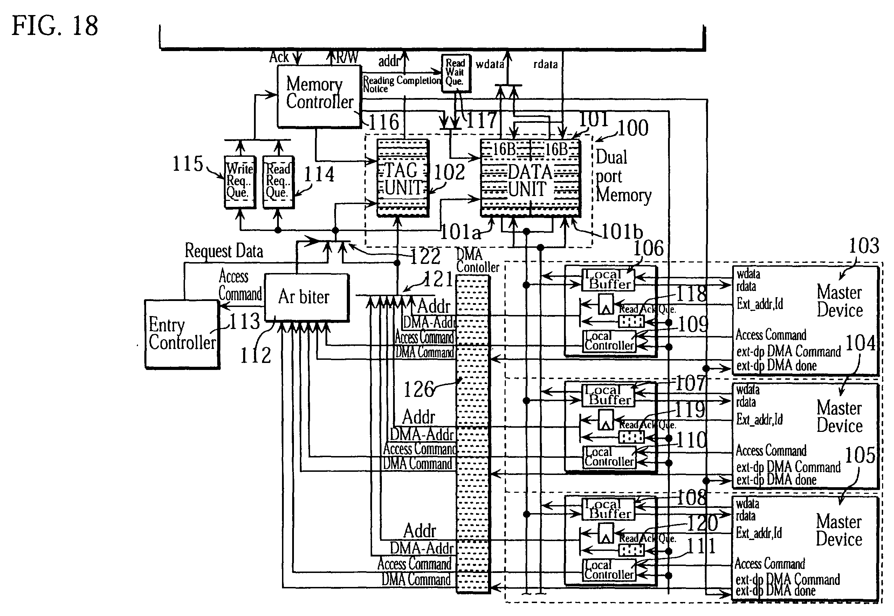

In Embodiment 6, the DMA transfer between the external memory 2 and the dual port memory 100 can be performed by each master device. FIG. 18 shows the data processing apparatus in Embodiment 6.

As shown in FIG. 18, the data processing apparatus of the present embodiment includes a DMA controller 126, and the master devices 103-105 output a DMA command with a DMA address to the DMA controller 126 to execute a DMA transfer between the external memory 2 and the dual port memory 100. Here, the DMA address is either entry address "Entr_addr" or external address "Ext_addr" indicating a transfer source or a transfer destination. The DMA controller 126, when the access command (DMA command) requesting the DMA transfer is issued, preserves the entry address "Entr_addr" and external address "Ext_addr" indicating the transfer source and transfer destination, and waits for the arbiter 112 to permit the data transfer requested by the DMA command. When the arbiter 112 permits the access to the dual port memory 100, the DMA controller 126 stores the external address "Ext_addr" included in the access command into the tag area corresponding to the entry address "Entr_addr" included in the access command, and stores the entry address "Entr_addr" into the read request queue 114 or the write request queue 115 depending on the transfer direction to allow the memory controller 116 to perform the data transfer between the entry area specified by the entry address "Entr addr" and the external area specified by the external address "Ext_addr".

The memory controller 116, as in Embodiment 4, performs the data transfer between the external memory 2 and the dual port memory 100. Having completed the data transfer, the memory controller 116 sends a notice "DMA_done" to each master device to notify of the completion of the data transfer and the command execution.

As described above, in the present embodiment, the master devices 103-105 can instruct the DMA controller to perform the DMA transfer between the external memory 2 and the dual port memory 100, as well as issuing a command to request a data transfer between the master devices 103-105 and the external memory 2. This enables the data to be read from the external memory 2 and stored in the dual port memory 2 beforehand, resulting in a high-speed data reading from the external memory to the master devices.

### 〈Embodiment 7〉

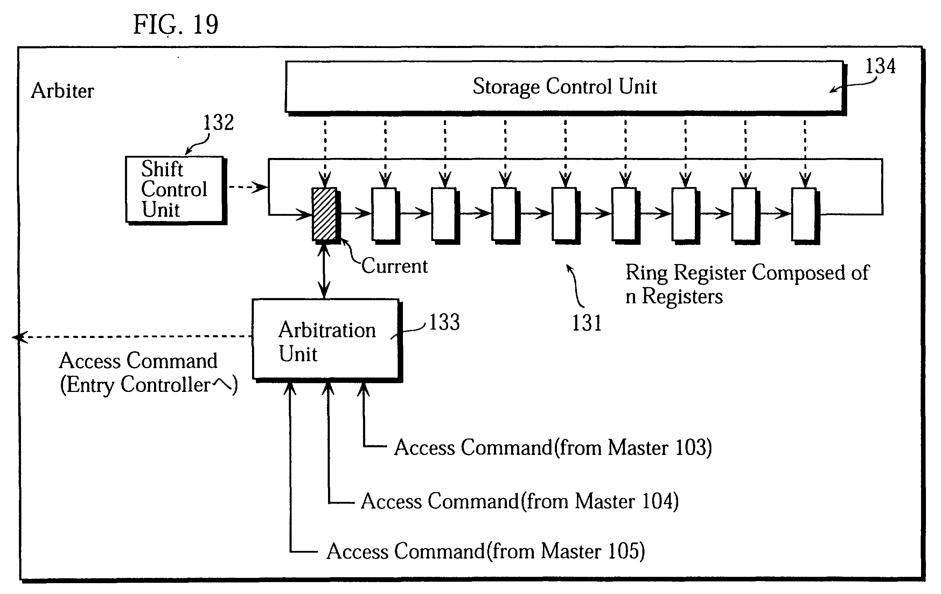

In Embodiment 7, the arbiter 112 can adjust the frequency at which a master device accesses the dual port memory 100. FIG. 19 shows the arbiter in Embodiment 7. As shown in FIG. 19, the arbiter 112 includes a ring register 131, a shift control unit 132, an arbitration unit 133, and a storage control unit 134.

The ring register 131 is composed of n registers each of which is connected one after the other in a circle and stores identification information of a master device.

The shift control unit 132 shifts the n pieces of identification information one at a cycle to specify one of the n pieces of identification information as current information.

The arbitration unit 133 permits a master device x to transfer data via an entry area in the dual port memory when the master device x issues an access command in a cycle in which identification information x of the master device x is specified as the current information.

When the master device x does not issue an access command in a cycle in which the identification information x is specified as the current information, the arbitration unit 133 permits a master device having the highest priority level among the master devices having lower priority levels than the master device x and having issued an access command in the cycle, to transfer data via an entry area in the dual port memory.

When the master device x and the master devices having lower priority levels than the master device x do not issue an access command in a cycle in which the identification information x is specified as the current information, the arbitration unit 133 permits a master device having the highest priority level among the master devices having higher priority levels than the master device x and having issued an access command in the cycle, to transfer data via an entry area in the dual port memory.

For example, the arbitration unit 133 permits a master device x having priority level "3" to transfer data via an entry area in the dual port memory when the master device x issues an access command in a cycle in which identification information x of the master device x is specified as the current information.

When the master device x having priority level "3" does not issue an access command but master devices having priority levels "4", "5", "6", and "7" issue access commands in a cycle in which the identification information x is specified as the current information, the arbitration unit 133 permits a master device having the highest priority level (in this example, the master device having priority level "4") among the master devices having lower priority levels than the master device x and having issued an access command in the cycle, to transfer data via an entry area in the dual port memory.

When the master device x and the master devices having lower priority levels than the master device x having priority level "3" do not issue an access command but master devices having priority levels "1" and "2" issue access commands in a cycle in which the identification information x is specified as the current information, the arbitration unit 133 permits a master device having the highest priority level (in this example, the master device having priority level "1") among the master devices having higher priority levels than the master device x and having issued an access command in the cycle, to transfer data via an entry area in the dual port memory.

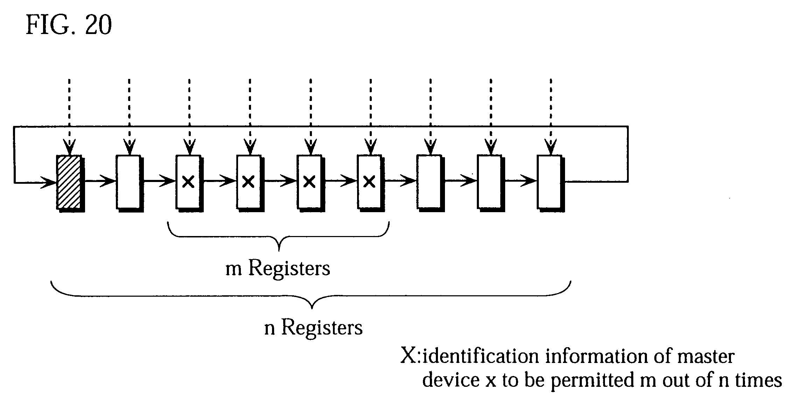

The storage control unit 134 stores an identification information x of the master device x in m registers out of the n registers, as shown in FIG. 20, when a user specifies m data transfers out of n data transfers in terms of the master device x, where n>m. With such a construction, the master device x is permitted to transfer data via an entry area in the dual port memory at a rate of m cycles per n cycles since the identification information x is specified as the current information at a rate of m cycles per n cycles. This allows the memory access frequency of the master device x to be adjusted.

As described above, the present embodiment can adjust the memory access frequency of a master device so that the master device is permitted to access a memory at a rate of m cycles per n cycles.

It should be noted here that the present embodiment may be arranged so that a certain master device is always permitted to perform a data transfer via the dual port memory 100 when it issues an access command regardless of the identification information specified as the current information.

### 〈Embodiment 8〉

In Embodiment 8, the data processing apparatus operates as a media core processor which performs a plurality of types of media processing.

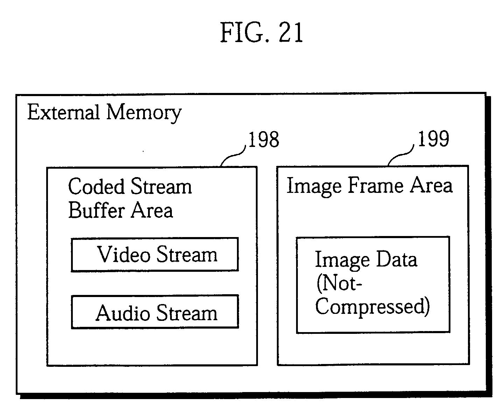

FIG. 21 shows a memory allocation in the external memory 2 in Embodiment 8. The drawing shows that a coded stream buffer area 198 and an image frame area 199 are allocated in the external memory 2.

The coded stream buffer area 198 stores MPEG streams, which have been input from outside, without decoding them. Here, the MPEG streams are bit streams containing a plurality of elementary streams. The elementary streams include video streams and audio streams. Each video stream is composed of a plurality of macro blocks. The video streams have been encoded (compressed) in units of macro blocks based on the inter-image correlation in the time domain. When the video streams are decoded, the interframe-predictive motion compensation is performed also in units of macro blocks. Each macro block is a matrix of 16(horizontal)×16(vertical) pixels, and has four brightness blocks Y0, Y1, Y2, and Y3 which are each composed of 8(horizontal)× 8(vertical) pieces of brightness data. Each macro block also includes a blue color-difference block Cb composed of 8(horizontal)×8(vertical) pieces of blue color-difference data, and includes a red color-difference block Cr composed of 8(horizontal)×8(vertical) pieces of red color-difference data.

The image frame area 199 stores pixels obtained by decoding the video streams, and also stores still-picture data and OSD pixel data.

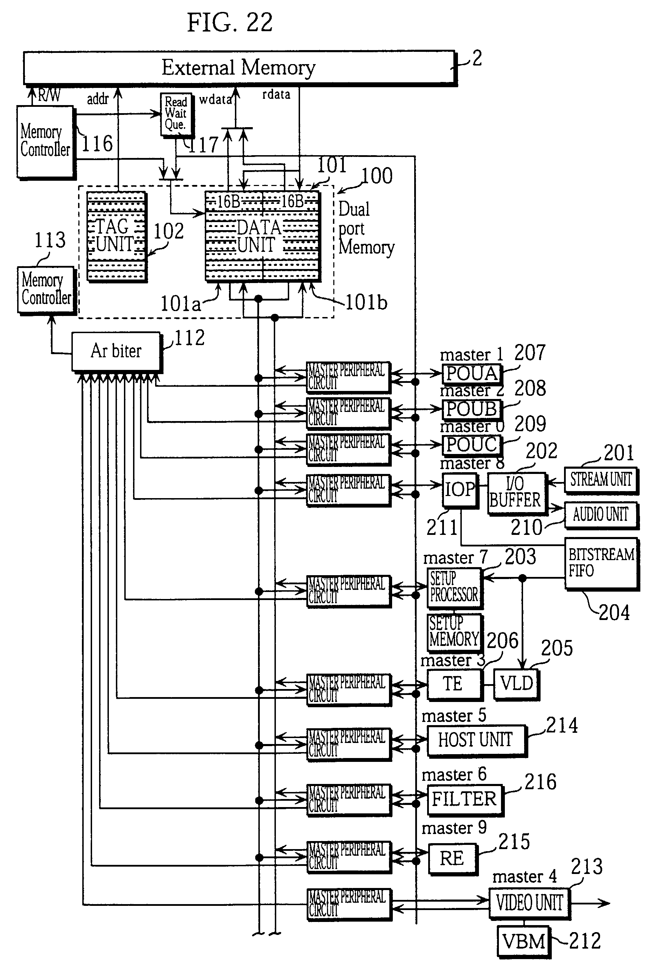

FIG. 22 shows the internal construction of the data processing apparatus in Embodiment 9. As shown in FIG. 22, ten master devices (0-9) are mounted which perform various types of media processing such as video decoding, audio decoding, video outputting, and computer graphics drawing.

In the media processing performed by each master device, the external memory 2 is used as a work area for various processes such as MPEG stream decoding process.

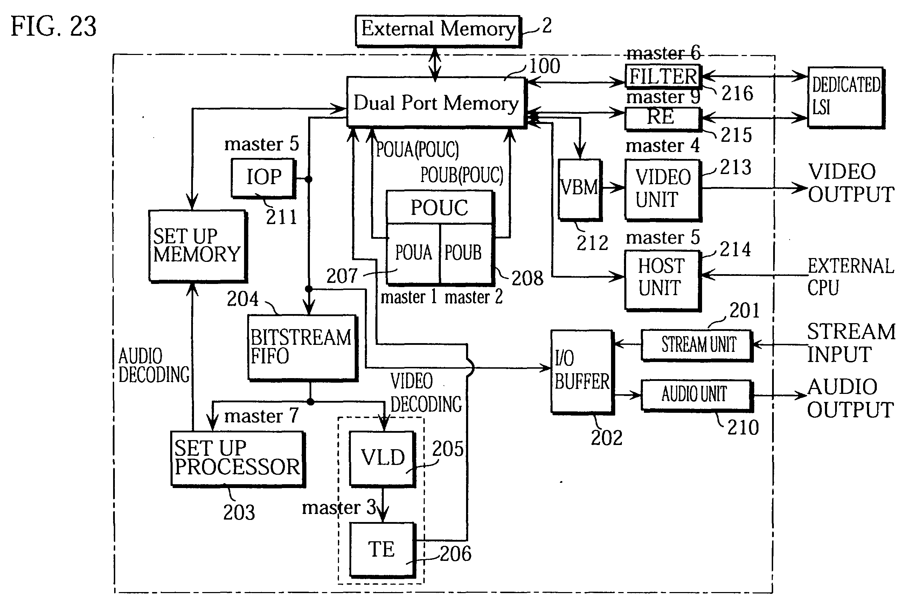

The internal construction of the data processing apparatus as a media core processor will be described. As shown in FIG. 22, the data processing apparatus includes a stream unit 201, an I/O buffer 202, a setup processor 203, a bitstream FIFO 204, a VLD 205, a TE 206, a POUA 207, a POUB 208, a POUC 209, an audio unit 210, an IOP 211, a VBM 212, a video unit 213, a host unit 214, a RE 215, and a filter 216. In FIG. 22, the master devices are represented by their names "master 0-9". In FIG. 22, a local buffer 106, a local controller 109, a read acknowledge queue 118 and the like, for example, are represented as a master peripheral circuit. FIG. 23 shows the internal construction of the data processing apparatus in which connections between the dual port memory 100 and the master devices are omitted. As apparent from FIG. 23, access by the master devices "0-9" concentrate on the dual port memory 100 and the external memory 2. Each component of the data processing apparatus as a media core processor will be described as follows.

The stream unit 201, when the media core processor extracts MPEG streams from record mediums or communication mediums, separates the MPEG streams into video streams and audio streams and writes the video and audio streams into the I/O buffer 202.

The setup processor 203 is a master device ("master 7") to decode audio streams multiplexed in the MPEG streams and write the decoded audio data to the external memory 2 via a master peripheral circuit and the dual port memory 100. The IOP 211 supplies audio streams to the bitstream FIFO 204 sequentially. The setup processor 203 extracts the audio streams from the IOP 211 and decode the audio steams.

The VLD (Variable Length Decoding unit) 205 extracts macro blocks from the video streams, and variable-length-decodes the four brightness blocks Y0, Y1, Y2, and Y3 and the two color-difference blocks Cb and Cr included in each macro block. The video streams are supplied to the bitstream FIFO 204 sequentially by the IOP 211. The VLD 205 extracts the video streams from the bitstream FIFO 204 and decodes the video streams.

The TE (Transform Engine unit) 206 is a master device ("master 3") to perform the dequantization and the inverse discrete cosine transform on the four brightness blocks Y0, Y1, Y2, and Y3 and the two color-difference blocks Cb and Cr having been variable-length-decoded by the VLD 205. The TE 206 writes the results to the external memory 2 via a master peripheral circuit and the dual port memory 100.

The POUA (Pixel Operation Unit A) 207, when the four brightness blocks Y0, Y1, Y2, and Y3 and the two color-difference blocks Cb and Cr having been subjected to the dequantization and the inverse discrete cosine transform are written to the external memory 2, reads these the brightness blocks and color-difference blocks from the external memory 2, and also reads reference images corresponding to these blocks from the image frame area 199 of the external memory 2. The POUA 207 then performs the half pel process on the reference images, and averages the results. The POUA 207 then adds up the averaging results, the four brightness blocks Y0, Y1, Y2, and Y3 and the two color-difference blocks Cb and Cr having been subjected to the dequantization and the inverse discrete cosine transform (the process up to now is called motion compensation). The POUA 207 writes the motion compensation results to the image frame area 199 of the external memory 2 via a master peripheral circuit and the dual port memory 100.

The POUA 207 also performs drawing of the on-screen display (OSD). The OSD is character fonts or computer graphics overlaid on the motion pictures in accordance with the instructions by the operator. The OSD is used to display on the display screen a counter indicating the current time, or a process such as "PLAY", "STOP", and "RECORD" currently performed by the data processing apparatus. The POUA 207 transfers data between the dual port memory 100 and the master device. The data transfer between the external memory 2 and the dual port memory 100 is performed by the POUC 209.

The POUB (Pixel Operation Unit B) 208 is a master device ("master 2") to perform the filtering of images and enlarging or reducing images. The POUB 208, as POUA 207, transfers data between the dual port memory 100 and the master device, and the data transfer between the external memory 2 and the dual port memory 100 is performed by the POUC 209.

The POUC (Pixel Operation Unit C) 209 is a master device ("master 0") to perform the data transfer between the external memory 2 and the dual port memory 100 by outputting the DMA command described in Embodiment 7.

The audio unit 210 sequentially reproduces and outputs the audio data stored in the I/O buffer 202.

The IOP (I/O Processor) 211 is a master device that performs the following three transfer processes. In the first transfer process, the IOP 211 writes the MPEG streams, which are sequentially input from the stream unit 201 and accumulated in the I/O buffer, to the coded stream buffer area 198 of the external memory 2 via a master peripheral circuit and the dual port memory 100. In the second transfer process, the IOP 211 supplies the video and audio streams to the bitstream FIFO 204 as the decoding processes by the setup processor 203 and the VLD 205 progress. In this process, the IOP 211 monitors the progress of the decoding performed by the setup processor 203 and the VLD 205 progress. Each time a certain amount of MPEG stream is decoded, the IOP 211 reads out the video and audio streams from the external memory 2 and supplies them to the bitstream FIFO 204. This prevents the underflow of the bitstream FIFO 204 and allows the decoding performed by the setup processor 203 and the VLD 205 to continue without interruption.

In the third transfer process, the IOP 211 reads the decoded audio data, which has been decoded by the setup processor 203, from the external memory 2 via the dual port memory 100 and a master peripheral circuit, and supplies the read audio data to the I/O buffer 202. The decoded audio data sequentially supplied by the IOP 211 to the I/O buffer 202 is sequentially reproduced and output by the audio unit 210.

The video unit 213 is a master device ("master 4") to read two or three lines of pixels from the image frame area 199 of the external memory 2 and store the pixels in the VBM (Video Buffer Memory) 212. The video unit 213 then converts the two or three lines of pixels stored in the VBM 212 to video signals and outputs the video signals to an external display apparatus such as a TV receiver.

The host unit 214 is a master device ("master 5") to exercise control in the data processing apparatus in accordance with instructions received from a host microcomputer connected to the data processing apparatus.

The RE (Rendering Engine) 215 is a master device ("master 9") to perform the rendering process of the computer graphics. The RE 215 exercises control when a dedicated LSI is connected to the data processing apparatus.

The filter 216 enlarges or reduces the still pictures and is a master device ("master 6"), as the RE 215, to exercise control when a dedicated LSI is connected to the data processing apparatus.

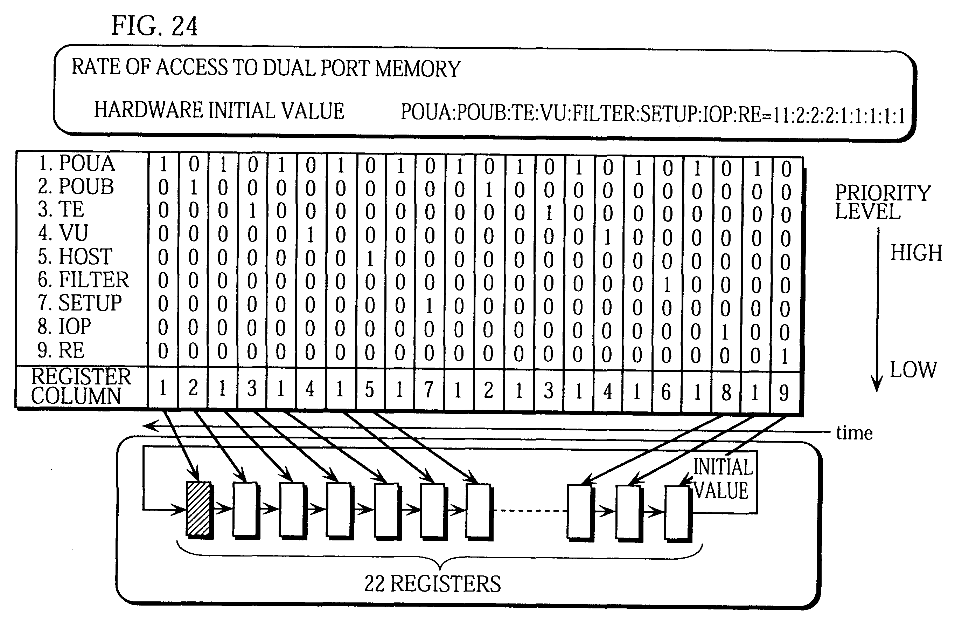

Up to this point, the components of the data processing apparatus have been described. Now, how the accesses to the dual port memory 100 by nine master devices are arbitrated in the data processing apparatus as a media core processor will be described. FIG. 24 shows priority levels of nine master devices. As shown in FIG. 24, the nine master devices are, in descending order of the priority level, 1: POUA 207, 2: POUB 208, 3: TE 206, 4: video unit 213, 5: host unit 214, 6: filter 216, 7: setup processor 203, 8: IOP 211, and 9: RE 215. These priority levels coincide with the numbers included in the names of the master devices. The arbiter 112 permits one of a plurality of contending master devices to transfer data via the dual port memory 100 in accordance with the procedure shown in Embodiment 9 and by referring to the priority levels assigned to the master devices.

The method shown in Embodiment 7 of adjusting the memory access frequency of master devices is also applied to the present embodiment. That is to say, identification information of each master device is stored in each register to specify the number of times each master device is permitted to transfer data.

The "register column" appearing in FIG. 24 shows the identification information of each master device stored in each of 22 registers. The drawing shows that 11 out of the 22 registers store identification information "1" indicating the POUA 207 ("master 1"), two registers store identification information "2" indicating the POUB 208, two registers store identification information "3" indicating the TE 206, and two registers store identification information "4" indicating the video unit 213. Since 11 out of the 22 registers store identification information "1" indicating the POUA 207, the data transfer requested by the POUA 207 is permitted at 11 cycles out of 22 cycles at maximum. Similarly, the POUB 208 is permitted at two cycles per 22 cycles at maximum, the TE 206 at two cycles, and the video unit 213 at two cycles.

As understood from above, the nine master devices are permitted to transfer data via the dual port memory 100 at the following rate:
POUA:POUB:TE:VU:F:S:IOP:RE = 11:2:2:2:1:1:1:1:1,
where VU represents the video unit, F the filter, and S the setup processor.

As described above, in the present embodiment, each master device for performing the media processing is connected to the dual port memory 100 via a master peripheral circuit. With such a construction, even if the need for changing the bit width of the read/write port of a master device arises, such a change can easily be done.

### 〈Embodiment 9〉

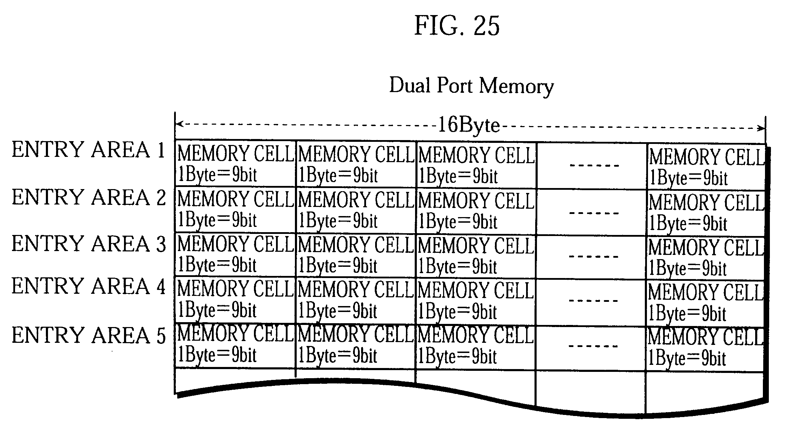

In Embodiment 9, the dual port memory 100 contains "1 byte = 9 bits" memory cells. FIG. 25 shows the construction of the entry areas in Embodiment 9. As shown in FIG. 25, each 16-byte entry area is composed of 16 "1 byte = 9 bits" memory cells. With such a construction, (1) "1 byte = 8 bits plus one sign bit" data and (2) "1 byte = unsigned 8 bits plus one bit" data can be transferred at high speeds as follows.

### (1) "1 Byte = 8 Bits Plus One Sign Bit" Data

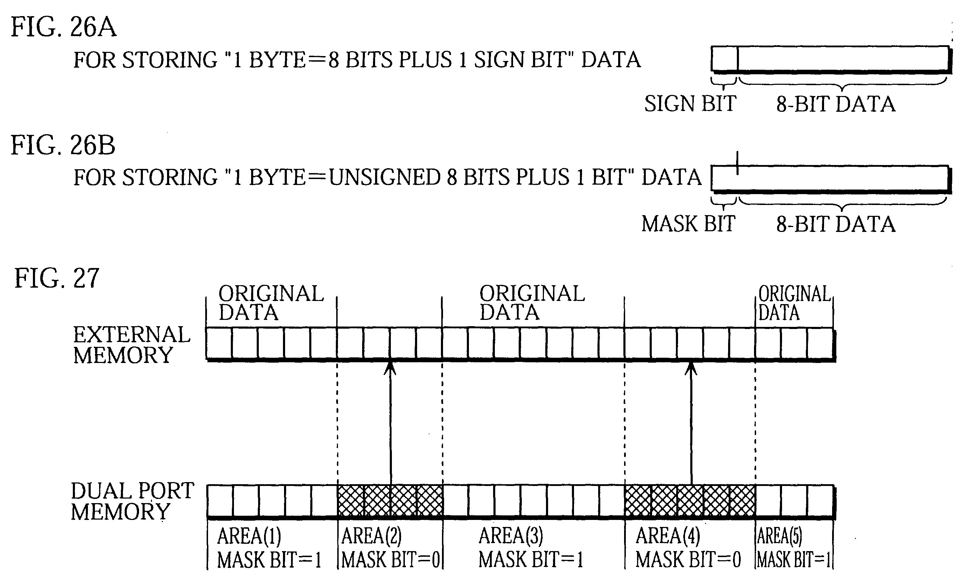

When "1 byte = 9 bits" data is defined as "1 byte = 8 bits plus one sign bit" data, the ninth bit is used as a sign bit. FIG. 26A shows the bit assignment in the memory cell for storing the "1 byte = 8 bits plus one sign bit" data. Suppose here that a plurality of master devices in the data processing apparatus includes the TE 206 for performing the inverse discrete cosine transform (IDCT) in the MPEG decoding process, and also includes the POUA 207 for performing the motion compensation in the MPEG decoding process. In this example, since the IDCT results are represented by "1 byte = 8 bits plus one sign bit" data, the two master devices need to transfer "1 byte = 8 bits plus one sign bit" data between them. Here, the TE 206 writes the "1 byte = 8 bits plus one sign bit" data as the IDCT results to the dual port memory 100 which contains "1 byte = 9 bits" memory cells, and the POUA 207 reads the "1 byte = 8 bits plus one sign bit" data from the dual port memory 100 to perform the motion compensation. With such performance, the "1 byte = 8 bits plus one sign bit" data is transferred between the two master devices at a high speed.

### (2) "1 Byte = Unsigned 8 Bits Plus One Bit" Data

When "1 byte = 9 bits" data is defined as "1 byte = unsigned 8 bits plus one bit" data, the ninth bit is used as a mask bit. FIG. 26B shows the bit assignment in the memory cell for storing the "1 byte = unsigned 8 bits plus one bit" data. When data is transferred from the dual port memory 100 to the external memory 2, the mask bit (the ninth bit) of each one-byte data in the entry areas is set to "off" ("0") when it is to be written to the external memory 2, and is set to has set to "on" ("1") when it is not to be written to the external memory 2.

When the above data is written to the external memory 2, each one-byte data with the "off" mask bit is written to the external memory 2, but each one-byte data with the "on" mask bit is not written to the external memory 2 and the original data of the external memory 2 remains. FIG. 27 shows how data is written to the external memory 2 depending on the mask bit. The lower portion of FIG. 27 shows entry areas (1) to (5). Of these, each one-byte data constituting the entry areas (1), (3), and (5) has the "on" ("1") mask bit, and each one-byte data constituting the entry areas (2) and (4) has the "off" ("0") mask bit. The data stored in areas of the external memory corresponding to the entry areas (2) and (4) is overwritten by the data of the entry areas, but the data stored in areas of the external memory corresponding to the entry areas (1), (3), and (5) is not overwritten and remains.

Whether each one-byte data is to be written to the external device 2 is set using the mask bit. The mask bit can be applied, for example, to a case where characters are superimposed on images. Suppose here that one screen of image data is stored in the external memory 2. To superimpose characters on the one screen of image data, the master device needs to perform what is called "Read & Modify & Write". That is, each master device needs to read image data from the external memory 2 (Read), take in the read image data, superimpose characters on the image data (Modify), and write the combined data back to the external memory (Write). The above process puts a heavy load on the master device since the master device must perform the data reading and data writing.

By using the mask bit, however, characters can easily be superimposed on the image data stored in the external memory 2 as follows. Prior to the superimposition of the characters on the image data, character data is stored in the dual port memory 100. The character data is composed of background data and stroke data. Here, the mask bit in each one-byte data in the dual port memory 100 corresponding to the background data is set to "on" ("1"), and the mask bit in each one-byte data corresponding to the stroke data is set to "off" ("0").

When data is written from the dual port memory 100 to the external memory 2 with the mask bit set as described above, the data stored in areas of the external memory 2 corresponding to the stroke data is overwritten by the stroke data, but the data stored in areas of the external memory corresponding to the background data is not overwritten and remains. By writing character data from the dual port memory 100 to the external memory 2 with the mask bit being set, composite images including characters superimposed on the images can easily be obtained.

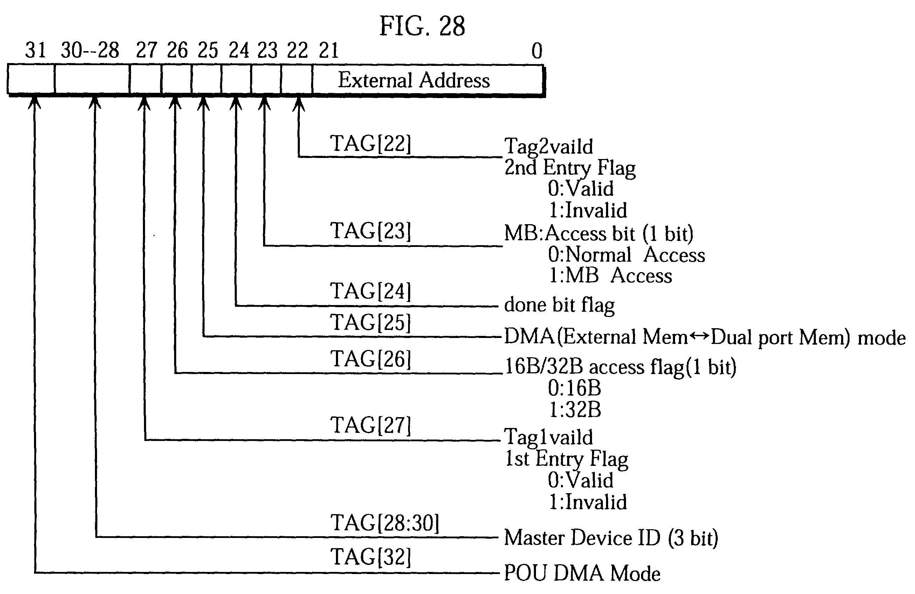

Up to this point, various embodiments of the present invention have been described. However, they are system examples that are considered to provide best effects. The present invention can be modified in a variety of ways depart from the scope of the present invention. The following are such modification examples.
(a) The tag area of the dual port memory 100 shown in FIG. 22 may store data as shown in FIG. 28. This example shown in FIG. 28 shows a case where one command is composed of two tag fields. The "Tag2valid" being the 22^{nd} bit in FIG. 28 is a flag indicating whether the second piece of tag information in one command is valid, or not. The 23^{rd} bit "MB Access bit" is a mark indicating whether it is for storing macro blocks. The 24^{th} bit "done bit" is a mark indicating whether it is the last data to be transferred for a request issued by a master device. The 25^{th} bit "DMA mode bit" indicates a data transfer between the external memory 2 and the dual port memory 100, or a data transfer between the external memory 2 and a master device. The 26^{th} bit "16B/32B access flag" indicates whether one (16 bytes) or both (32 bytes) of the two bank areas constituting one entry area are valid. The 27^{th} bit "Tag1valid" is a flag indicating whether the first piece of tag information in one command is valid, or not. The 32^{nd} bit "POU DMA Mode" is a flag indicating whether the POU DMA Mode is set to "on" ("1").
(b) Each master device may be connected to the control bus so that the master devices can exchange information. The control bus is used to transfer an entry address when a master device transfers the entry address to another master device for data writing, conforming to certain rules.
   When one of a plurality of master devices issues a data write request to write data to the external memory 2, data is written to an area in the external memory 2 and an entry address of the area is transferred to the control bus, the entry address being the start address of the area, and at least one of the others of the plurality of master devices requests to read data from a location indicated by the entry address.
   When one of the plurality of master devices issues a data write request, data is written to an area in the external memory 2 and an end address of the area is transferred to the control bus, and at least one of the others of the plurality of master devices requests to write data to a location starting from an address following the end address transferred to the control bus.
(c) In Embodiment 3, a memory address server may be included to manage the use state of the external memory 2. The memory address server includes an address table and manages the use state of the external memory 2 in units of 1Kbit-blocks in minimum. When the external memory 2 contains n blocks, the capacity of the external memory 2 is represented as "1 Kbit × n blocks". In this case, the size of the address table is represented as "2 bits × n". The two bits in the address table indicates the use state of a block in the external memory 2. Here, when a block in the external memory 2 is not used, the two bits in the address table are "00" (indicating "not used" or "empty") . When data is being written to a block, the two bits in the address table are "01" (indicating "being written" or "being used"). When data has been written to a block, the two bits are "10" (indicating "written" or "used"). When a block is not used but is reserved, the two bits are "11" ("reserved").
   When a master device issues a request to write data to the external memory 2, the memory address server notifies the master device of addresses of areas which are indicated as "empty". When data is written to the external memory 2 in accordance with a request issued by a master device, the memory address server updates the use state information of the data-written area to "written". When one of the plurality of master devices reads data from areas among the plurality of areas in the external memory 2, the master device issues a request to release the areas, and the memory address server updates the use state information to indicate that the areas having been requested to be released are "empty". With the above-described operations, the use efficiency of the external memory 2 is improved.
(d) In Embodiment 3, one master device may integrate accesses to the dual port memory 26. In this modification, the master device 4 reads data from the area in the external memory 2 assigned to the master device 4 and transfers the read data to the dual port memory 26, and also reads data from the areas in the external memory 2 assigned to the master devices 5 and 6 and transfers the read data to the dual port memory 26. With such a data reading, all the data requested by the master devices 4-6 is read and transferred to the dual port memory 26. The master devices 5 and 6 obtain the data read from the external memory 2 by performing DMA transfers to transfer data from the areas specified by the entry information to the local memories 8 and 9 corresponding to them.

When writing data to the external memory 2, the master device 4 writes data from the local memory 7 to the area in the dual port memory 26 assigned to the master device 4, and notifies the master devices 5 and 6 of the entry information of the master devices 5 and 6 in the dual port memory 26. The master device 4 then performs DMA transfers to transfer data from the areas in the dual port memory 26 for the master devices 4-6 to the areas in the external memory 2 for the master devices 4-6. With such operations, data for the master devices 4-6 is written to the external memory 2.

The present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A data processing apparatus for performing data transfers between a plurality of master devices and a memory device, comprising:
a memory bus connected which includes two points and is connected at one of the two points to the memory device;
a plurality of local buses each of which includes at least two points and is connected at one of the at least two points to one of the plurality of master devices;
a transfer controller for reading data from the memory device, writing data to the memory device, and controlling the data transfers on the memory bus so that data is transferred at a transfer rate suitable for the master device on a corresponding local bus, and at a transfer rate suitable for the memory device on the memory bus; and
a plurality of local buffer means each of which is connected to one of the plurality of local buses at another of the at least two points, is connected to the memory bus at the other of the two points, and inputs and outputs data in a manner that cancels out a difference between a transfer rate of the memory bus and a transfer rate of each local bus.

2. The data processing apparatus of Claim 1, wherein
the transfer controller includes:
a memory controller which, when one of the plurality of master devices issues a data read request, reads data from the memory device in accordance with the data read request and exercises control so that data is transferred on the memory bus at the transfer rate suitable for the memory device, and when one of the plurality of master devices issues a data write request, exercises control so that data to be written to the memory device is transferred on the memory bus at the transfer rate suitable for the memory device and writes the data to the memory device in accordance with the data write request; and
a plurality of local controllers corresponding to the plurality of local buses on a one-to-one basis, wherein when one of the plurality of master devices issues one of the data read request and the data write request, a corresponding local controller transfers one of (1) data that has been read from the memory device and (2) data to be written to the memory device in accordance with the request on a corresponding local bus at a transfer rate suitable for the master device that has issued the request.

3. The data processing apparatus of Claim 2, wherein
each local controller controls a corresponding local buffer means to take in, from the memory bus, data specified by a data read request issued by a corresponding master device and output the data to a corresponding local bus, and
controls the corresponding local buffer means to take in, from the corresponding local bus, data to be written to the memory device specified by a data write request issued by the corresponding master device and output the data to the memory bus.

4. The data processing apparatus of Claim 2 further comprising:
an arbiter for, when a contention occurs between two or more requests issued by two or more master devices among the plurality of master devices, acknowledging one of the two or more requests and rejecting the other requests, the two or more requests being either data read requests or data write requests, wherein
master devices that issued the rejected requests suspend transferring data on the memory bus and corresponding local buses.

5. The data processing apparatus of Claim 4, wherein
one of the plurality of local buses includes three or more points and is connected to two or more master devices at two or more points out of the three or more points, and
when a contention occurs between requests issued by master devices among the two or more master devices, the arbiter acknowledges one of the requests and rejects the other requests, the requests being either data read requests or data write requests, and
master devices that issued the rejected requests suspend transferring data on the one of the plurality of local buses.

6. The data processing apparatus of Claim 1, wherein
the memory device receives a synchronization clock signal having an operating frequency which is different from an operating frequency of the data processing apparatus, and
the data processing apparatus further comprises:
a dual port memory device which has one read/write port connected to the memory device and has a plurality of ports connected to the plurality of local buffer means respectively, and inputs and outputs data in a manner that cancels out a difference between the operating frequencies of the memory device and the data processing apparatus.

7. The data processing apparatus of Claim 6, wherein
the transfer controller exercises control so that the dual port memory device takes in from the memory bus data that has been transferred to the memory bus in accordance with data read requests issued by master devices, and the dual port memory outputs the data to local buffer means corresponding to the master devices that issued the data read requests.

8. The data processing apparatus of Claim 6, wherein
when data to be written to the memory device has been transferred to the local buffer means in accordance with data write requests issued by corresponding master devices, the transfer controller exercises control so that the dual port memory device takes in the data from local buffer means, accumulates the data, and outputs the accumulated data to the memory bus.

9. The data processing apparatus of Claim 1, wherein
the plurality of master devices are connected to a control bus, and
when one of the plurality of master devices issues a data write request, data is written to an area in the memory device and an entry address of the area is transferred to the control bus, the entry address being the start address of the area, and
at least one other master device requests to read data from a location indicated by the entry address.

10. The data processing apparatus of Claim 1, wherein
the plurality of master devices are connected to a control bus, and
when one of the plurality of master devices issues a data write request, data is written to an area in the memory device and an end address of the area is transferred to the control bus, and
at least one of the others of the plurality of master devices requests to write data to a location starting from an address following the end address transferred to the control bus.

11. The data processing apparatus of Claim 1 further comprising:
an address server which prestores use state information indicating whether each of a plurality of areas in the memory device is used or empty, and when one of the plurality of master devices issues a data write request to write data to the memory device, informs the master device having issued the data write request of empty areas in the memory device by referring to the use state information.

12. The data processing apparatus of Claim 11, wherein
the address server includes:
a first update unit for, when data is written to an area in the memory device in accordance with a data write request, updating the use state information to indicate that the area is being used.

13. The data processing apparatus of Claim 11, wherein
when one of the plurality of master devices reads data from areas among the plurality of areas in the memory device, the master device issues a request to release the areas, and
the first update unit updates the use state information to indicate that the areas having been requested to be released are empty.

14. A data processing apparatus connected to a memory device, comprising:
a plurality of master devices for issuing access commands which each request to either read data from the memory device or write data to the memory device;
a dual port memory; and
a transfer controller for, when an access command is issued, controlling data transfers between each master device and the memory device via the dual port memory in a manner that cancels out a difference between the operating frequencies of the memory device and the data processing apparatus.

15. The data processing apparatus of Claim 14, wherein
the dual port memory includes a plurality of entry areas and a plurality of tag areas corresponding to the plurality of entry areas, an entry address being assigned to each of the plurality of entry areas,
each access command specifies an external address indicating either a data read destination or a data write destination, and the external address indicates a location of one of a plurality of external areas in the memory device to be accessed, wherein
the data processing apparatus further comprises:
an entry managing means for, when one of the plurality of master devices issues an access command for accessing the memory device, assigning one of the plurality of entry areas in the dual port memory to a data transfer between the master device and the memory device, and storing an external address included in the access command into a tag area corresponding to the entry area, wherein
the transfer controller includes:
a memory control unit for performing a data transfer between the entry area and an external area indicated by the external address stored in the tag area.

16. The data processing apparatus of Claim 15, wherein
the entry managing means includes:
a use state information sending unit for sending entry addresses of empty entry areas in the dual port memory as use state information to each master device, wherein
the data processing apparatus includes:
a local control unit for transferring data between the plurality of master devices and the empty entry areas indicated by the entry addresses sent as the use state information, the transferred data having been read from the memory device or being to be written to the memory device.

17. The data processing apparatus of Claim 16, wherein
the entry managing means includes:
a bit sequence holding unit for holding a bit sequence, the bit sequence consisting of a plurality of bits corresponding to the plurality of entry addresses, and each of the plurality of bits being set to "on" or "off", wherein
the use state information sending unit sends entry addresses corresponding to "off" bits, as the use state information to each master device, and
the entry managing means includes:
a first update unit for, after one of the plurality of master devices issues an access command, updating bits corresponding to the entry addresses having been sent as the use state information by setting the bits to "on"; and
a second update unit for, after data is stored in entry areas specified by the entry addresses and then transferred to the memory device or to a master device, updating the bits to "off".

18. The data processing apparatus of Claim 17, wherein
when all bits in the bit sequence are set to "on", the use state information sending unit sends to each master device the use state information indicating that the dual port memory has no empty entry area, and
upon a receipt of the use state information indicating that the dual port memory has no empty entry area, each master device does not issue an access command until the master device receives entry addresses of empty entry areas.

19. The data processing apparatus of Claim 15, wherein
after a data transfer from an external area to an entry area is completed, the memory control unit outputs a reading completion notice, which includes an entry address corresponding to the entry address, to a master device having issued an access command requesting the data transfer, wherein
the data processing apparatus includes:
a plurality of local control units which correspond to the plurality of master devices on a one-to-one basis, wherein when a master device receives the reading completion notice, a local control unit corresponding to the master device extracts an entry address from the reading completion notice and transfers data from an entry area specified by the extracted entry address to the corresponding master device.

20. The data processing apparatus of Claim 19, wherein
when one of a pair of master devices among the plurality of master devices issues an access command including an entry address of an entry area in the dual port memory, one of the plurality of local access controllers allows the one of the pair of master devices to transfer data to the other of the pair of master devices via the entry area specified by the entry address in the access command.

21. The data processing apparatus of Claim 19, wherein
the plurality of entry areas in the dual port memory are divided into data-reading areas and data-writing areas, the data-reading areas storing data having been read from the memory device, and the data-writing areas storing data to be written to the memory device,
when a master device issues an access command requesting to read data from the memory device, the entry managing means outputs entry addresses of empty data-reading areas in the dual port memory to the master device that has issued the access command,
when a master device issues an access command requesting to write data to the memory device, the entry managing means outputs entry addresses of empty data-writing areas in the dual port memory to the master device that has issued the access command,
the memory control unit performs a data transfer between the memory device and the entry areas specified by the entry addresses output by the entry managing means, and
one of the plurality of local access controllers performs a data transfer between the master device and the entry areas specified by the entry addresses output by the entry managing means.

22. The data processing apparatus of Claim 15, wherein
access commands requesting a DMA (Direct Memory Access) transfer for transferring data between an entry area in the dual port memory and an external area in the memory device are further used,
each access command requesting a DMA transfer specifies an external address of an external area in the memory device and specifies an entry address of an entry area in the dual port memory, and
the data processing apparatus further comprises:
a DMA control unit for, when an access command requesting DMA transfer is issued, exercising control to store the external address specified by the access command into a tag area corresponding to the entry area specified by the access command, and allowing the memory control unit to perform a data transfer between the entry area specified by the entry address and the external area specified by the external address.

23. The data processing apparatus of Claim 15, wherein
each of the plurality of entry areas is composed of a plurality of memory cells,
each memory cell stores a mask bit which is set to either "on" or "off", and
the memory control unit, when transferring data from an entry area to the memory device, does not write data of memory cells with an "on" mask bit to the memory device and writes only data of memory cells with an "off" mask bit to the memory device.

24. The data processing apparatus of Claim 15 further comprising:
an arbiter for, when two or more master devices issue access commands in a same cycle, permitting one of the two or more master devices to transfer data via an entry area in the dual port memory; and
a plurality of local control units which correspond to the plurality of master devices on a one-to-one basis, wherein when a master device is permitted to transfer data by the arbiter, a local control unit corresponding to the master device transfers data between an entry area and the master device, wherein
when a master device is permitted to transfer data by the arbiter, the memory control unit transfers data between an entry area and the memory device.

25. The data processing apparatus of Claim 24, wherein
the arbiter includes:
a ring register which is composed of n registers each of which is connected one after the other in a circle and stores identification information of a master device, wherein n is an integer;
a shift controller for shifting the n pieces of identification information one at a cycle to specify one of the n pieces of identification information as current information; and
a permission unit for permitting a master device x to transfer data via an entry area in the dual port memory when the master device x issues an access command in a cycle in which identification information of the master device x is specified as the current information.

26. The data processing apparatus of Claim 25 further comprising:
a storage controller for storing an identification information x of the master device x in m registers out of the n registers when a user specifies m data transfers out of n data transfers in terms of the master device x, wherein n>m, and
the permission unit permits the master device x to transfer data via an entry area in the dual port memory when the master device x issues an access command in a cycle in which the identification information x is specified as the current information.

27. The data processing apparatus of Claim 26, wherein
each master device is assigned a priority level, and
when the master device x does not issue an access command in a cycle in which the identification information x is specified as the current information, the permission unit permits a master device having a lower priority level than the master device x and having issued an access command in the cycle, to transfer data via an entry area in the dual port memory.

28. The data processing apparatus of Claim 27, wherein
when the master device x and the master device having a lower priority level than the master device x do not issue an access command in a cycle in which the identification information x is specified as the current information, the permission unit permits a master device having a higher priority level than the master device x and having issued an access command in the cycle, to transfer data via an entry area in the dual port memory.

29. The data processing apparatus of Claim 14 further comprising:
a plurality of local buffer means which correspond to the plurality of master devices and each have one read/write port connected to the dual port memory, have another read/write port connected to a corresponding master device, and input and output data having been read from the dual port memory and input and output data to be written to the dual port memory in a manner that adjusts a bit width of a read/write port of each master device to a bit width of a read/write port of the dual port memory.

30. The data processing apparatus of Claim 29, wherein
each of the plurality of local buffer means is a double buffer which simultaneously inputs and outputs data having been read from the dual port memory and inputs and outputs data to be written to the dual port memory.
